# EUROPEAN PATENT APPLICATION

(11) **EP 2 641 936 A1**
(43) Date of publication of application: **25.09.2013**
(21) Application number: 13173013.7
(22) Date of filing: 31.10.2006
(51) Int. Cl.: C08L 27/18, B29C 43/02, C08F 214/26, C08J 5/00

(54) **Method for molding polytetrafluoroethylene, polytetrafluoroethylene molded body, crosslinkable polytetrafluoroethylene, powered polytetrafluoroethylene crosslinked body, resin blend composition of matter and resin blend molded body**

(30) Priority: 31.10.2005 JP 2005317612
(62) Divisional of application: 12179831.8
(71) Applicant: DAIKIN INDUSTRIES, LTD., Osaka-shi, Osaka 530-8323 (JP)
(72) Inventor: Nanba, Yoshinori, Settsu-shi, Osaka 5668585 (JP); Meiten, Koh, Settsu-shi, Osaka 5668585 (JP)
(74) Representative: Scholz, Volker

(57) **Abstract**

The problem for the present invention is to offer a PTFE resin that does not require the hot coining method and is more difficult to deform than conventional PTFE resins. A polytetrafluoroethylene molded boxy that relates to the present invention wherein said molded body is obtained from a crosslinking poltetrafluoroethylene that possesses a reactive functional group that is represented by the Generic Formula (2):

<Structure 2> 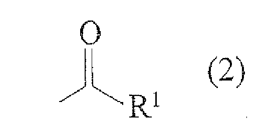 (where in the formula, R¹ is a hydrogen atom, halogen atom, -OR³, -N(R³)₂, -R³, and R³ is an alkyl group of from 1 to 10 carbon atoms that optionally contains fluorine, or is a hydrogen atom),
and has a melt viscosity of 10⁷ Pas (10⁸ poise) or higher or has a modulus of elongation prior to heat treatment of 100 MPa or higher; and substantially does not flow even when heated up to or above its melting point, is baked after it is compression molded.

## Description

### TECHNICAL FIELD

The present invention relates to a method for molding polytetrafluoroethylene. Moreover, the present invention relates to a polytetrafluoroethylene molded body and powdered polytetrafluoroethylene crosslinked body obtained by this molding method. In addition, the present invention relates to a crosslinkable polytetrafluoroethylene that can form crosslinked structures. Furthermore, the present invention relates to a resin blend composition including matter of a powdered polytetrafluoroethylene crosslinked body as well as a crosslinking polytetrafluoroethylene, and a resin blend molded body obtained from this resin blend composition of matter.

### BACKGROUND ART

Polytetrafluoroethylene (abbreviated below as PTFE) resin has superior chemical resistance, frictional resistance, weather resistance, electrical insulation properties, flame retardant properties and the like, and is used widely for sliding materials, flame retardant additives, low-dielectric-constant film materials and the like. However, there are problems with PTFE resins such as significant wear and creep under sliding conditions or under compression conditions at high temperatures. For this reason, it would be desirable to improve further the wear characteristics and creep characteristics and the like of PTFE resins in the industrial arena. As a means to solve this problem, methods such as "formulating PTFE resins with additives" and "crosslinking PTFE resins by irradiating the PTFE resin with ionizing radiation (for example, see Patent Documents 1 and 2)" are widely known to those skilled in the art. Moreover, other methods have been reported such as "crosslinking PTFE resins through thermal treatment of the PTFE resin to introduce carboxyl groups (for example, see Patent Document 3)", "mixing of fluorinated pitch with PTFE resin followed by crosslinking of the PTFE resin by heating or by irradiating with ionizing radiation (for example, see Patent Document 4)", and "formulating PTFE resin to a specific surface area of 1.0∼2.0 m²/g of carbon fibers(for example, see Patent Document 5)", and the like.
<Patent Document 1>
   Japanese Published Unexamined Patent Application No. H7-118423 (1995)
<Patent Document 2>
   Japanese Published Unexamined Patent Application No. 2001-329069
<Patent Document 3>
   Japanese Published Unexamined Patent Application No. H3-234753 (1991)
<Patent Document 4>
   Japanese Published Unexamined Patent Application No. 2003-119293
<Patent Document 5>
   Japanese Published Unexamined Patent Application No. 2003-41083

### DISCLOSURE OF THE INVENTION

### PROBLEM TO BE SOLVED BY THE INVENTION

Nevertheless, in the "formulation with additives or carbon fibers" methods, there are concerns that anisotropy will be generated in the various physical properties of the PTFE resin molded body and that a deleterious effect will be exerted on the surface characteristics (such as low frictional properties and the like) of the PTFE resin. In addition, it is reported that the PTFE resin obtained according to the "PTFE resin crosslinked by irradiation with ionizing radiation" method possesses low frictional properties, but these is another problem in the observations of reduced strength and reduced crystallinity in a PTFE resin molded body obtained by this method that are caused by cleavage of the PIPE main chains due to the ionizing radiation, and also problems that are attributed to the heterogeneity of the crosslinks from the crosslinking by ionizing radiation that are due to the amorphous regions that undergo crosslinking first. Moreover, this method requires a heat treatment of the PTFE molded body under high temperatures that are above the melting point of PTFE, and in addition requires maintaining a precise temperature ±20 °C, preferably 5 °C, and furthermore requires that the heat treatment be carried under low oxygen concentrations in order to get a satisfactory crosslinking efficiency. For these reasons, there are problems with the inevitably expensive equipment that is required to employ this method. Additionally, in manufacturing the equipment, as this method has the difficulties in uniformly irradiating the PTFE molded body with ionizing radiation, problems are introduced by the heterogeneous production of crosslinks in the case of powders, problems with the generation of wrinkles or the like in the case of film. Furthermore, when the crosslinks are due to heat, the performance enhancement effect is limited. Moreover, in the "crosslinking of PTFE through the use of fluorinated pitch" method, there are problems with the generation of harmful HF gas and F₂ gas during the crosslinking reaction. Furthermore, in the compression molding of the crosslinked PTFE powders obtained as described above, as shown in Japanese Published Unexamined Patent Application No. 2001-240682, Japanese Published Unexamined Patent Application No. 2002-114883 and the like, there is a problem with the requirement that un-crosslinked PTFE must be mixed in because of the difficulties when the compression molding is carried out on the crosslinked PTFE powder alone, and problems are present such as with the difficulties in compression molding when the crosslinked PTFE percentage content is increased, and with the deleterious effect on productivity due to the necessity of using the hot coining method with the pressurized cooling from a temperature above the melting point during compression molding.

The subject of the present invention is to offer a PTFE resin that can be formed by common molding methods such as compression molding and the like without the necessity for expensive equipment or hot coining methods or the like that are deleterious to productivity, and where harmful substances are not generated during manufacture, and conventional strength, crystallinity and surface characteristics and the like are preserved, and where there is neither anisotropy nor heterogeneity, and where the PTFE resin is more difficult to deform than conventional PTFE resin.

### MEANS TO SOLVE THE PROBLEM

In the polytetrafluoroethylene molded body that relates to the present invention wherein a crosslinkable polytetrafluoroethylene that possesses at least one type of reactive functional group selected from the group consisting of cyano group (-CN), a first functional group as represented by the Generic Formula (1):

### <Structure 1>

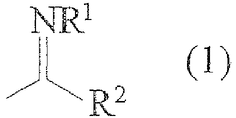

(where in the formula, the respective R¹ and R² are independently a hydrogen atom, halogen atom, -OR³, -N(R³)₂, -R³, and R³ is an alkyl group of from 1 to 10 carbon atoms that optionally contains fluorine, or is a hydrogen atom), and a second functional group as represented by the Generic Formula (2):

### <Structure 2>

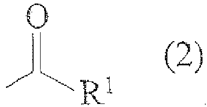

(where in the formula, R¹ is a hydrogen atom, halogen atom, -OR³, -N(R³)₂, -R³, and R³ is an alkyl group of from 1 to 10 carbon atoms that optionally contains fluorine, or is a hydrogen atom), and substantially does not flow even when heated up to or above its melting point, is compression molded and then afterward is baked.

Furthermore, "alkyl group of from 1 to 10 carbon atoms that optionally contains fluorine" in the present Specification means an alkyl group of from 1 to 10 carbon atoms wherein one or more hydrogen atoms are optionally substituted by fluorine atoms.

In addition, the polytetrafluoroethylene molded body of the present invention is obtained from a crosslinkable polytetrafluoroethylene that possesses at least one type of reactive functional group selected from the group consisting of cyano group (-CN), a first functional group as represented by the Generic Formula (1):

### <Structure 3>

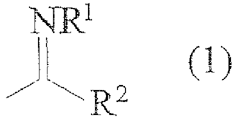

(where in the formula, the respective R¹ and R² are independently a hydrogen atom, halogen atom, -OR³, -N(R³)₂, -R³, and R³ is an alkyl group of from 1 to 10 carbon atoms that optionally contains fluorine, or is a hydrogen atom), and a second functional group as represented by the Generic Formula (2):

### <Structure 4>

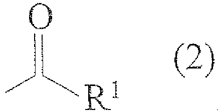

(where in the formula, R¹ is a hydrogen atom, halogen atom, -OR³, -N(R³)₂, -R³, and R³ is an alkyl group of from 1 to 10 carbon atoms that optionally contains fluorine, or is a hydrogen atom), and substantially does not flow even when heated up to or above its melting point, that is baked after it is compression molded. Furthermore, the crosslinking polytetrafluoroethylene more preferably possesses at least one type of reactive functional group selected from the group consisting of cyano group (-CN) and a first functional group as represented by the Generic Formula (1).

Additionally, the powdered polytetrafluoroethylene crosslinked body that relates to the present invention is obtained by a crosslinking reaction on a crosslinkable polytetrafluoroethylene that possesses at least one type of reactive functional group selected from the group consisting of cyano group (-CN), a first functional group as represented by the Generic Formula (1):

### <Structure 5>

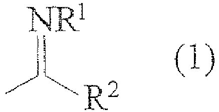

(where in the formula, the respective R¹ and R² are independently a hydrogen atom, halogen atom, -OR³, -N(R³)₂, -R³, and R³ is an alkyl group of from 1 to 10 carbon atoms that optionally contains fluorine, or is a hydrogen atom), and a second functional group as represented by the Generic Formula (2):

### <Structure 6>

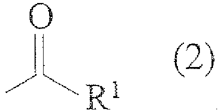

(where in the formula, R¹ is a hydrogen atom, halogen atom, -OR³, -N(R³)₂, -R³, and R³ is an alkyl group of from 1 to 10 carbon atoms that optionally contains fluorine, or is a hydrogen atom), and substantially does not flow even when heated up to or above its melting point. Furthermore, the crosslinking polytetrafluoroethylene more preferably possesses at least one type of reactive functional group selected from the group consisting of cyano group (-CN) and a first functional group as represented by the Generic Formula (1).

Moreover, the crosslinkable polytetrafluoroethylene that relates to the present invention possesses at least one type of reactive functional group selected from the group consisting of cyano group (-CN), a first functional group as represented by the Generic Formula (1):

### <Structure 7>

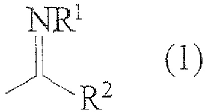

(where in the formula, the respective R¹ and R² are independently a hydrogen atom, halogen atom, -OR³, -N(R³)₂, -R³, and R³ is an alkyl group of from 1 to 10 carbon atoms that optionally contains fluorine, or is a hydrogen atom).

Thus, if the aforementioned crosslinkable polytetrafluoroethylene is heated to a temperature that is ≥200 °C and is at or below the melting point of polytetrafluoroethylene, and is crosslinked, the polytetrafluoroethylene molded body or the powdered polytetrafluoroethylene crosslinked body that are objects of the present application can be obtained.

In addition, it is also possible to obtain the polytetrafluoroethylene molded body that is the object of the present application through compression molding, ram extrusion molding, paste extrusion molding, or the like, of the abovementioned powdered polytetrafluoroethylene crosslinked body.

Furthermore, the aforementioned crosslinkable polytetrafluoroethylene and the powdered polytetrafluoroethylene crosslinked body can be dispersed in or blended as a modifying material with another resin or resin precursor such as a molding resin or elastomer. As to the method for obtaining such a blend molded body, examples of methods that can be named include the mixture of the aforementioned crosslinkable polytetrafluoroethylene composition of matter and a resin or a resin precursor being hot molded, or a mixture of the aforementioned powdered polytetrafluoroethylene crosslinked body with another resin or a resin precursor and being molded, or the like. Furthermore, in the former method, a crosslinking agent in the crosslinking polytetrafluoroethylene composition of matter within a heated mold can react with the polytetrafluoroethylene to form a crosslinked structure. Furthermore, examples that can be named of what is referred to here as "resin", without any particular limitations, include polyethylene resins, polypropylene resins, ethylene-vinyl acetate copolymer resins, ethylene-ethyl acrylate copolymer resins, ethylene-vinyl alcohol copolymer resins, poly(cycloolefin) resins, poly(isobutylene) resins, polyolefin resins, poly(methylpentene) resins, poly(vinyl chloride) resins, polystyrene resins, acrylonitrile-styrene copolymer resins (AS resins), styrene-methyl methacrylate copolymer resins, acrylonitrile-butylene-styrene copolymer resins (TABS resins), acrylonitrile-acrylate-styrene copolymer resins (AAS resins), acrylonitrile-ethylene-propylene-diene rubber-styrene copolymer resins (AES resins), acrylonitrile-styrene-acrylate copolymer resins (ASA resins), silicone-acrylonitrile-styrene copolymer resins (SAS resins), acrylic resins, methacrylic resins, polyamide resins, polycarbonate resins, polyacetal resins, modified poly(phenylene ether) resins, poly(butylene terephthalate) resins, poly(ethylene terephthalate) resins, poly(ethylene naphthalate) resins, poly(phenylene sulfide) resins, polysulfone resins, fluororesins, poly(ether sulfone) resins,poly(ether imide) resins, poly(ether ketone) resins, poly(ether ether ketone) resins, polyimide resins, polyarylate resins, silicone resins, poly(lactic acid) resins, polyurethane resins, polyester resins, aromatic poly(ester amide) resins, aromatic azomethine resins, poly(arylene sulfide) resins,polyketone resins, poly(amide-imide) resins and poly(ether nitrile) resins and the like. Additionally, the fluororesins here include polytetrafluoroethylene, tetrafluoroethylene-hexafluoropropylene copolymers, tetrafluoroethylene-perfluoroalkyl vinyl ether copolymers and poly(chlorotrifluoroethylene) and the like. In addition, examples that can be named of what is referred to here as "resin precursor", without any particular limitations, include epoxy resins, phenolic resins, urea resins, melamine resins, unsaturated polyester resins, alkyd resins, diaryl phthalate resins and the like, as liquids, solutions, solid powders and the like before curing.

### EFFECT OF THE INVENTION

If the molding method for polytetrafluoroethylene that relates to the present invention is implemented, it is possible to offer a polytetrafluoroethylene resin that the conventional strength, crystallinity and surface characteristics are maintained without any anisotropy or heterogeneity and the polytetrafluoroethylene resin is more difficult to deform than conventional PTFE resin. Moreover, for carrying out this crosslinking reaction, there is no requirement for a hot coining method with expensive equipment and a deleterious effect on productivity, or the like.

Additianally, if the crosslinking reaction is carried out on the crosslinkable polytetrafluoroethylene that relates to the present invention, it is possible to offer a polytetrafluoroethylene resin that the conventional strength, crystallinity and surface characteristics are maintained without any anisotropy or heterogeneity, and the polytetrafluoroethylene resin is more difficult to deform than conventional PTFE resin. In addition, in carrying out this crosslinking reaction, there is no requirement for a hot coining method with expensive equipment and a deleterious effect on productivity, and conventional molding methods such as compression molding and the like are sufficient. Moreover, no hazardous substances are produced in the crosslinking reaction.

Additionally, the abovementioned crosslinkable polytetrafluoroethylene and powdered polytetrafluoroethylene crosslinked body can also be molded by itself, for example when fluororesins other than polytetrafluoroethylene are also admixed, they can be molded at high weight ratios. Furthermore, in the case of compression molding, the aforementioned crosslinkable polytetrafluoroethylene and the powdered polytetrafluoroethylene crosslinked body have the characteristic that they can be molded by the free baking method. Thus, the molded body obtainable in this way maintains conventional surface characteristics without anisotropy and becomes more difficult to deform than conventional polytetrafluoroethylene resin.

Furthermore, the powdered polytetrafluoroethylene crosslinked body or crosslinkable polytetrafluoroethylene that relate to the present invention can be dispersed in or blended as a modifying material in another material such as a molding resin or elastomer or the like to improve the flame retardant properties, non-adhesive properties, sliding characteristics, water/oil repelleney, electrical characteristics, resistance to stains, corrosion resistance, weather resistance and the like.

### BEST MODE FOR IMPLEMENTING THE INVENTION

### <Crosslinkable polytetrafluoroethylene>

For the crosslinkable polytetrafluoroethylene (referred to below as PTFE) that relates to this embodiment, for the crosslinking reaction-capable sites, preferred examples that can be named include those that possess a cyano group (-CN) as well as crosslinkable reactive group as represented by the Generic Formulas (1) and (2).

### <Structure 8>

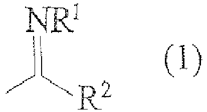

(where in the formula, the respective R¹ and R² are independently a hydrogen atom, halogen atom, -OR³, -N(R³)₂, -R³, and R³ is an alkyl group of from 1 to 10 carbon atoms that optionally contains fluorine, or is a hydrogen atom)

### <Structure 9>

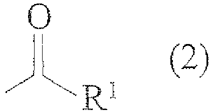

(where in the formula, R¹ is a hydrogen atom, halogen atom, -OR³, -N(R³)₂, -R³, and R³ is an alkyl group of from 1 to 10 carbon atoms that optionally contains fluorine, or is a hydrogen atom)

Among these, the cyano group as well as functional groups represented by the Generic Formula (1) are more preferred from the perspective of reactivity. In addition, from the perspective of ease of manufacture, functional groups represented by the Generic Formula (2) are more preferred, and in particular the carboxyl group is preferred.

Moreover, the substituent R³ in the functional group as represented by the Generic Formula (1) is more preferred to be a hydrogen atom from the perspective of reactivity.

Additionally, this functional group reacts with one or a plurality of functional groups of the crosslinkable PTFE intramolecularly or intermolecularly and forms a crosslinking structure.

Crosslinking reactions are considered to be of the two types seen below.

### (1) π-electron deficient heterocycle cyclization reaction

In this type of crosslinking reaction, an azole, triazole, azine, diazine, triazine or the like is formed. An example of such a crosslinking reaction that can be named is the crosslinked structure formed through the triazine cyclization reaction (see Chemical Equation (A)).

### <Structure 10>

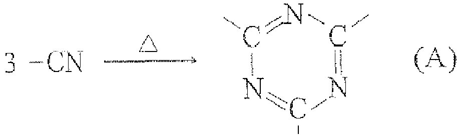

In addition, for example, when two types of functional group exist side by side such as the cyano group and cyano group derivatives having the formula shown below

### <Structure 11>

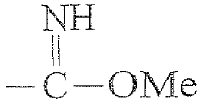

, an example of such a crosslinked structure that can be named is the crosslinked structure formed through the imidazole cyclization reaction as shown in Chemical Equation (B) below. Furthermore, the -OMe in Chemical Formulas 11 and 12 can be -OR³ or -N(R³)₂.

### <Structure 12>

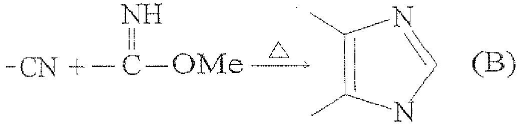

### (2) Radical decarboxylation or decarbonylation reactions

If a COOH or a COOMe is heated to ≥150 °C, a loss of CO₂ will occur and radicals will be formed. Moreover, in the case of COH or COCl, a loss of CO will occur and radicals will be formed. Thus, a crosslinking structure is formed through the coupling of radicals of these types (see Chemical Equation (C) and (D)).

### <Structure 13>

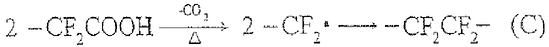

### <Structure 14>

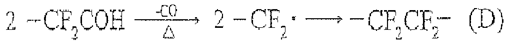

Through suitable applications of the abovementioned two crosslinking reactions, it is possible to obtain PTFE crosslinks.

In the case of the application of the heterocycle cyclization reaction, from the perspective of the polymerization, the perspectives of the crosslinking reactivity, and the perspectives of the stability of the functional group, the utilization of the triazine cyclization reaction using the cyano group is preferred, and when the decarboxylation or decarbonylation reactions are used, from the perspective of the polymerizability, the crosslinking reactivity and the stability of the functional group, the crosslinking reaction due to decarboxylation-coupling that uses the carboxylic acid is preferred.

A site that is capable of a crosslinking reaction can be introduced through a macromolecular reaction on PTFE, and can also be introduced through copolymerization of tetrafluoroethylene (abbreviated below as TFE) with a monomer that can provide a site that is capable of a crosslinking reaction. Methods to introduce a functional group into PTFE by a macromolecular reaction include dry methods such as by treatment of the PTFE with ionizing radiation, lasers, an electron beam, plasma, corona discharge and the like, and introduction of a functional group and wet methods such as reduction by electrochemical means or with a Li metal/naphthalene complex and the like, are known conventionally. Furthermore, employment of the latter methods is preferred from the perspective of ease of manufacturing.

In the crosslinkable PTFE that relates to this embodiment, the content of the monomer that provides the crosslinking site based on the TFE as required monomer is preferably ≥0.01 mol%, more preferably ≥0.03 mol%, and furthermore preferably ≥0.06 mol%, and is preferably ≤20 mol%, more preferably ≤10 mol%, and furthermore preferably ≤5 mol%. If the content of the monomer that provides the site that is capable of a crosslinking reaction is ≤0.01 mol%, an inadequate effect will be obtained, and if the content of the monomer is ≤20 mol%, there will be difficulties with the polymer obtained.

The monomer that provides the crosslinking site in this embodiment can have an ethylenic unsaturated bond, and can have a functional group such as a cyano group (-CN) as well as the functional groups represented by Generic Formula (1) and Generic Formula (2), and any desired compound can be employed if it possesses copolymerizability with TFE.

### <Structure 15>

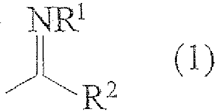

(where in the formula, the respective R¹ and R² are independently a hydrogen atom, halogen atom, -OR³, -N(R³)₂, -R³, and R³ is an alkyl group of from 1 to 10 carbon atoms that optionally contains fluorine, or is a hydrogen atom)

### <Structure 16>

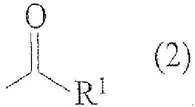

(where in the formula, R¹ is a hydrogen atom, halogen atom, -OR³, -N(R³)₂, -R³, and R³ is an alkyl group of from 1 to 10 carbon atoms that optionally contains fluorine, or is a hydrogen atom)

For the monomer, either one of both open chain and cyclic compounds can be used, If the monomer is a cyclic compound, examples of compounds that possess the aforementioned functional group that can be named include cyclopentene and its derivatives, norbornene and its derivatives, polycyclic norbornene and its derivatives, vinyl carbazole and its derivatives, along with such compounds in which either some or all of the hydrogen atoms have been replaced with halogen atoms, in particular with fluorine atoms, compounds that are substituted with fluoroalkyl groups, and the like. Furthermore, from the perspective of polymerizability, open chain compounds are preferred monomers. In addition, in particular among the open chain compounds, the monomers depicted by Generic Formula (3) are preferred.

CY¹Y²=CY³(O)ₘ(R⁸)ₙ-Z¹ (3)

(wherein Y¹ ∼ Y³ are respectively and independently hydrogen atom, halogen atom, -CH₃, or -CF₃, R⁸ is a divalent organic group, n is 0 or 1, m is 0 when n is 0 and is 0 or 1 when n is 1, and Z¹ is any of the abovementioned functional groups)

In the above, from the perspective of polymerizability, Y¹ ∼ Y³ are preferably hydrogen atoms or halogen atoms, and among the halogen atoms a fluorine atom is preferred. Specifically, examples of preferred structures that can be named include CH₂=CH-, CH₂=CF-, CFH=CF-, CFH=CH- and CF₂=CF-. In particular, the CH₂=CH-, CH₂=CF- and CF₂=CF- structures are more preferred. Furthermore, when n = 0, CH₂=CHCN, CH₂=CHCOOR.

### <Structure 17>

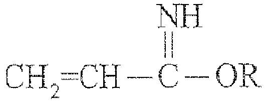

CF₂=CFCN, CF₂=CFCOOR,

### <Structure 18>

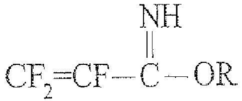

yield examples of compounds that are crosslinkable monomers.

When n = 0, m = 0, but when n = 1, m can be either 0 or 1. When m = 1, examples of preferred structures that can be named include CH₂=CHO-, CH₂=CFO-, CFH=CFO-, CFH=CHO- and CF₂=CFO-. In particular, CH₂=CHO-, CH₂=CFO- and CF₂=CFO- are examples of preferred structures that can be named.

For R⁸, any desired divalent organic group can be selected, but from the perspective of ease of synthesis and of polymerization, alkylene groups with from 1 to 100 carbon atoms that optionally contain an ether bond are preferred. Furthermore, the number of carbon atoms is more preferably from 1 to 50, and is furthermore preferably from 1 to 20. In such alkylene groups, some or all of the hydrogen atoms can be replaced by halogen atoms, and in particular replaced with fluorine atoms. If the number of carbon atoms is ≥100, there will be difficulties with the polymer, since it will not be possible to obtain the preferred characteristics even if the crosslinking is carried out. The aforementioned alkylene group can be a straight-chain or a branched-chain group. Such straight-chain or branched-chain alkylene groups are constructed from the minimum structural units of which examples are shown below.
(i) Straight-chain type minimum structural units: -CH₂-, -CHF-, -CF₂-, -CHCl-, -CFCl-, -CCl₂-
(ii) Branched-chain type minimum structural units:

### <Structures 19>

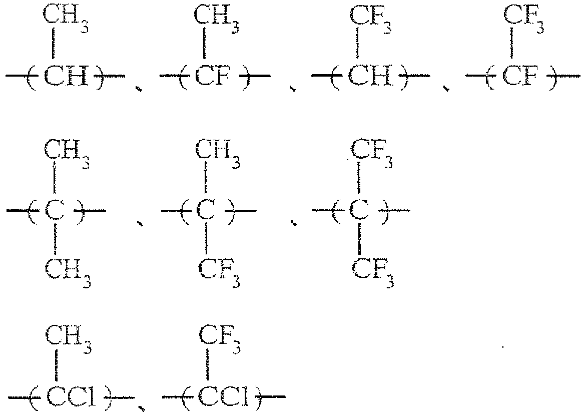

When the alkylene group represented by R⁸ does not contain an ether group, the alkylene group represented by R⁸ can be constructed from such minimum structural units alone, or paired with the straight-chain type (i) or paired with the branched-chain type (ii), or can be constructed from suitable combinations thereof. Additionally, when the alkylene group represented by R⁸ does contain an ether group, the alkylene group represented by R⁸ can be constructed from such minimum structural units alone and an oxygen atom, or paired with the straight-chain type (i) or paired with the branched-chain type (ii) with an oxygen atom, or can be constructed from suitable combinations thereof, but cannot be bonded to the paired oxygen atom. Furthermore, for the alkylene group represented by R⁸, even among the above examples, a dehydrochlorination reaction due to base cannot occur, so for purposes of greater stability, it is preferable that the R⁸ group be constructed from structural units that do not contain Cl.

In addition, it is furthermore preferable that the R⁸ possess the structure depicted by -R¹⁰-, -(OR¹⁰)- or -(R¹⁰O)- (where R¹⁰ is an alkylene group with from 1 to 6 carbon atoms that can optionally contain fluorine). Specifically, R¹⁰ can be the following straight-chain type or branched-chain type preferable examples.

Examples of the straight-chain type that can be named include -CH₂-, -CHF-, -CF₂-, -CH₂CH₂-, -CF₂CH₂-, -CF₂CF₂-, -CH₂CF₂-, -CH₂CH₂CH₂-, -CH₂CH₂CF₂-, -CH₂CF₂CH₂-, -CH₂CF₂CF₂-, -CF₂CH₂CH₂-, -CF₂CF₂CH₂-, -CF₂CH₂CF₂-, -CF₂CF₂CF₂-, -CH₂CF₂CH₂CF₂-, -CH₂CF₂CF₂CF₂-, -CH₂CH₂CF₂CF₂-, -CH₂CH₂CH₂CH₂-, -CH₂CF₂CH₂CF₂CH₂-, -CH₂CF₂CF₂CF₂CH₂-, -CH₂CF₂CF₂CH₂CH₂-, -CH₂CH₂CF₂CF₂CH₂-, -CH₂CF₂CH₂CF₂CH₂-, -CH₂CF₂CH₂CF₂CH₂CH₂-, -CH₂CH₂CF₂CF₂CH₂CH₂-, -CH₂CF₂CH₂CF₂CH₂CH₂- and the like, and examples of the branched-chain type that can be named include

### <Structures 20>

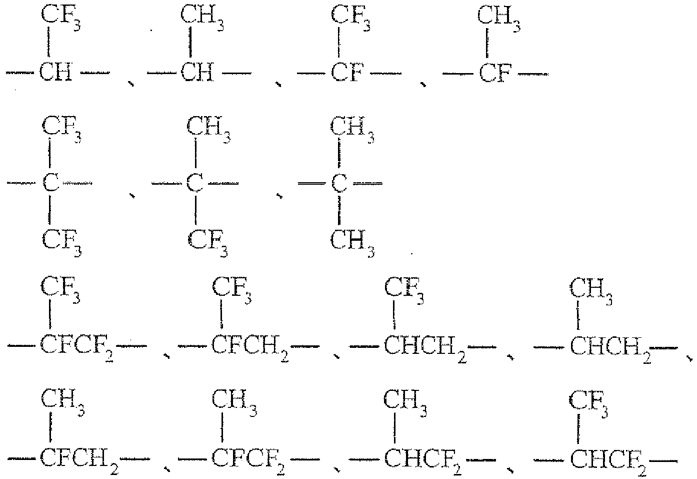

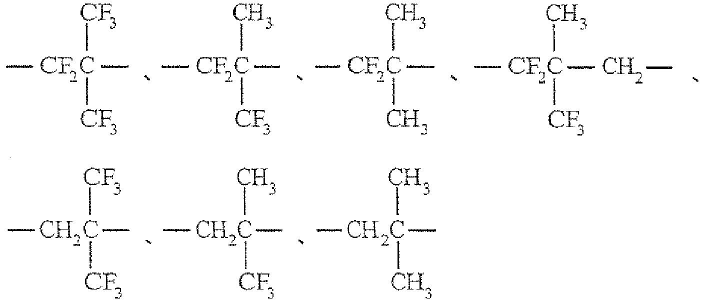

and the like. Moreover, from the above structures, the compounds below can be obtained as examples.

CH₂=CH-(CF₂)ₙ-Z² (4)

(where in the formula, n is an integer from 2 to 8)

CY⁴₂=CY⁴-(CF₂)ₙ-Z² (5)

(where in the formula, Y⁴ is a hydrogen atom or a fluorine atom, and n is an integer from 1 to 8)

CF₂=CF-CF²R_{f}⁴-Z² (6)

(where in the formula, R_{f}⁴ is

### <Structure 21>

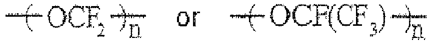

, and n is an integer from 0 to 5)

CF₂=CFCF₂(OCF(CF₃)CF₂)ₘ(OCH₂CF₂CF₂)ₙOCH₂CF₂-Z² (7)

(where in the formula m is an integer from 0 to 5, and n is an integer from 0 to 5)

CF₂=CFCF₂(OCH₂CF₂CF₂)ₘ(OCF(CF₃)CF₂)ₙOCF(CF₃)-Z² (8)

(where in the formula m is an integer from 0 to 5, and n is an integer from 0 to 5)

CF₂=CF(OCF₂CF(CF₃))ₘO(CF₂)ₙ-Z² (9)

(where in the formula, m is an integer from 0 to 5, and n is an integer from 1 to 8)

CF₂=CF(OCF₂CF(CF₃))ₘ-Z² (10)

(where in the formula, m is an integer from 1 to 5)

CF₂=CFOCF₂(CF(CF₃)OCF₂)ₙCF(-Z²)CF₃ (11)

(where in the formula, n is an integer from 1 to 4)

CF₂=CFO(CF₂)ₙOCF(CF₃)-Z² (12)

where in the formula, n is an integer from 2 to 5)

CF₂=CFO(CF₂)ₙ(C₆H₄)-Z² (13)

(where in the formula, n is an integer from 1 to 6)

CF₂=CF(OCF₂CF(CF₃))ₙOCF₂CF(CF₃)-Z² (14)

(where in the formula, n is an integer from 1 to 2)

CH₂=CFCF₂O(CF(CF₃)CF₂O)ₙCF(CF₃)-Z² (15)

(where in the formula, n is an integer from 0 to 5)

CF₂=CFO(CF₂CF(CF₃)O)ₘ(CF₂)ₙ-Z² (16)

(where in the formula, m is an integer from 0 to 5, and n is an integer from 1 to 3)

CH₂=CFCF₂OCF(CF₃)OCF(CF₃)-Z² (17)

CH₂=CFCF₂OCH₂CF₂-Z² (18)

CF₂=CFO(CF₂CF(CF₃)O)ₘCF₂CF(CF₃)-Z₂ (19)

(where in the formula, m is an integer ≥0)

CF₂=CFOCF(CF₃)CF₂O(CF₂)ₙ-Z² (20)

(where in the formula, n is an integer ≥1)

CF₂=CFOCF₂OCF₂CF(CF₃)OCF₂-Z² (21)

CF₂=CF-(CF₂C(CF₃)F)ₙ-Z² (22)

(where in the formula, n is an integer from 1 to 5)

CF₂=CFO-(CFY⁵)ₙ-Z² (23)

(where in the formula, Y⁵ is F or -CF₃, and n is an integer from 1 to 10)

CF₂=CFO-(CF₂CFY⁶O)ₘ-(CF₂)ₘ-Z² (24)

(where in the formula, Y⁶ is F or -CF₃, m is an integer from 1 to 10 and n is an integer from 1 to 3)

CH₂=CFCF₂O-(CF(CF₃)CF₂O)ₙ-CF(CF₃)-Z² (25)

(where in the formula, n is an integer from 1 to 10)

CF₂=CFCF₂O-(CF(CF₃)CF₂O)ₙ-CF(CF₃)-Z² (26)

(where in the formula, n is an integer from 1 to 10)
(In Generic Formulas (4) through (26), Z² can be any of the abovementioned functional groups)

Furthermore, when the abovementioned Z² is COOR¹, in order that the -COOR¹ group acts as a crosslinking site, -COOR¹ group preferably is a structure that reacts readily with the reactive functional groups of the crosslinking agent. In other words, an R¹ that is readily eliminated is preferred. Examples of such R¹ that can be named include sulfonate esters such as of toluenesulfonic acid, nitrotoluenesulfonic acid and trifluoromethanesulfonic acid, phosphate esters as well as organophosphate esters and the like. However, sulfonate esters are not preferred for fear that the sulfonic acid that is eliminated is highly acidic and there is a concern about the corrosion of metals (for example, metal molding equipment). In addition, phosphate esters or organophosphate esters are not preferred for the reason that there is a concern that the phosphoric acid or the organophosphoric acid that is eliminated will cause deleterious effects on the environment. Consequently, a preferred R¹ is an alkyl group that optionally contains an ether bond or an aromatic ring. In this case, the number of carbon atoms is preferably from 1 to 20, more preferably from 1 to 10, and furthermore preferably from 1 to 6. Additionally, replacement of some of the hydrogen atoms by halogen atoms is preferable because the eliminatability will be high. Specifically, examples of R¹ when it is an alkyl group optionally containing an ether bond or an aromatic ring that can be named include methyl, ethyl, propyl, isopropyl, butyl, phenyl, 1,1,1-trifluoroethyl, 1,1,1,2,2-heptafluoropropyl, 1,1,1,3,3,3-hexafluoroisopropyl and the like. However, the -COOH is preferred because it undergoes decarboxylation at low temperatures without chain transfer taking place and makes efficient coupling possible. Moreover, from the perspective of high reactivity, an acid halide group as indicated by -COX is preferred. However, when the PTFE polymerization is carried out in an aqueous medium, the acid halide group is not preferred because of its instability in water. Furthermore, the acid halide group is preferred when the PTFE polymerization is carried out in a nonaqueous medium.

In the monomers depicted in Generic Formulas (4) through (26), any of the abovementioned functional groups as the crosslinking sites will promote crosslinking reactions with the crosslinking agents.

Specific examples of monomers as depicted in Generic Formula (5) that can be named include:

CF₂=CF-CF₂-CN, CF₂=CF-CF₂CF₂-CN,

### <Structure 22>

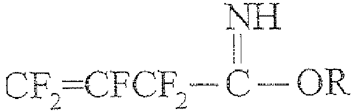

### <Structure 23>

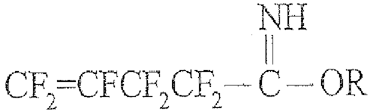

CF₂=CF-CF₂-COOH, CF₂=CF-CF₂CF₂-COOH,

CF₂=CF-CF₂-COOCH3., CF₂=CF-CF₂CF₂-COOCH₃,

and the like, but from the perspective of crosslinking reactivity,

CF₂=CF-CF₂-CN, CF₂=CF-CF₂CF₂-CN,

### <Structure 24>

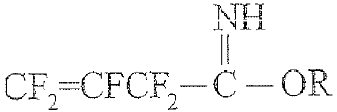

and

### <Structure 25>

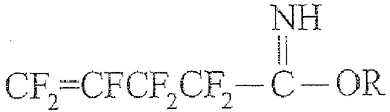

are preferred, and from the perspective of superior polymerization reactivity,

CF₂=CF-CF₂-COOH, CF₂=CF-CF₂CF₂-COOH,

CF₂=CF-CF₂-COOCH₃ and CF₂=CF-CF₂CF₂-COOCH₃

are preferred.

Specific examples of monomers as depicted in generic Formula (22) that can be named include:

CF₂=CFCF₂C(CF₃)FCN, CF₂-CF(CF₂C(CF₃)F)₂CN,

### <Structure 26>

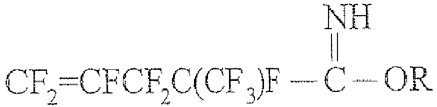

### <Structure 27>

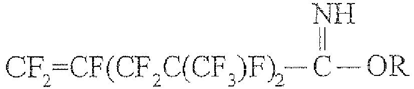

CF₂=CFCF₂C(CF₃)FCOOH,

CF₂₌CF(CF₂C(CF₃)F)₂COOH,

CF₂=CFCF₂C(CF₃)FCOOCH₃.

CF₂=CF(CF₂C(CF₃)F)₂COOCH₃

and the like, but from the perspective of polymerization reactivity,

CF₂=CFCF₂C(CF₃)FCOOH

is preferred.

Specific examples of monomers as depicted in generic Formula (23) that can be named include:

CF₂=CFOCF₂CF₂CF₂CN, CF₂=CFOCF₂CF₂CN,

CF₂=CFOCF₂CN,

### <Structure 28>

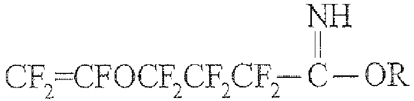

,

### <Structure 29>

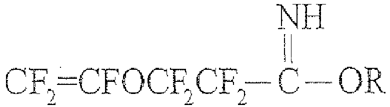

### <Structure 30>

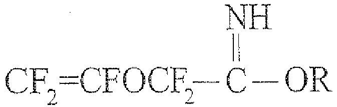

CF₂=CFOCF₂CF₂CF₂COOH, CF₂=CFOCF₂CF₂COOH,

CF₂=CFOCF₂COOH,

CF₂=CFOCF₂CF₂CF₂COOCH₃,

CF₂=CFOCF₂CF₂COOCH₃, CF₂=CFOCF₂COOCH₃

and the like, but from the perspective of crosslinking reactivity and polymerization reactivity,

CF₂=CFOCF₂CF₂CF₂COOH, CF₂=CFOCF₂CF₂COOH,

CF₂=CFOCF₂CF₂CF₂COOCH₃,

and CF₂=CFOCF₂CF₂COOCH₃
are preferred.

Specific examples of monomers as depicted in generic Formula (24) that can be named include:

CF₂=CFOCF₂CF(CF₃)OCF₂CF₂CN,

### <Structure 31>

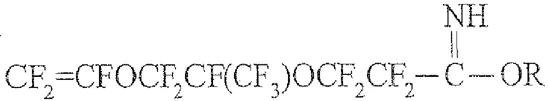

,

CF₂=CFOCF₂CF(CF₃)OCF₂CF₂COOH,

CF₂=CFOCF₂CF(CF₃)OCF₂CF₂COOCH₃

and the like, but from the perspective of reactivity,

CF₂=CFOCF₂CF(CF₃)OCF₂CF₂CN and

### <Structure 32>

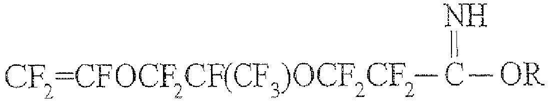

are preferred, and from the perspective of ease of manufacture,

CF₂=CFOCF₂CF(CF₃)OCF₂CF₂COOH

and

CF₂=CFOCF₂CF(CF₃)OCF₂CF₂COOCH₃,

are preferred.

Specific examples of monomers as depicted in generic Formula (25) that can be named include:

CH₂=CFCF₂OCF(CF₃)CN,

CH₂=CFCF₂OCF(CF₃)CF₂OCF(CF₃)CN,

CH₂=CFCF₂O(CF(CF₃)CF₂O)₂CF(CF₃)CN,

### <Structure 33>

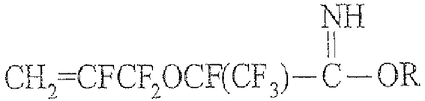

,

### <Structure 34>

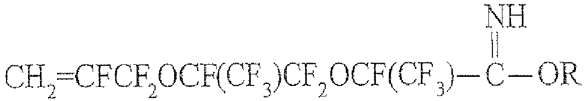

,

### <Structure 35>

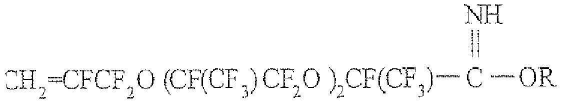

,

CH₂=CFCF₂OCF(CF₃)COOH,

CH₂=CFCF₂OCF(CF₃)CF₂OCF(CF₃)COOH,

CH₂=CFCF₂O(CF(CF₃)CF₂O)₂CF(CF₃)COOH,

CH₂=CFCF₂OCF(CF₃)COOCH₃,

CH₂=CFCF₂OCF(CF₃)CF₂OCF(CF₃)COOCH₃

CH₂=CFCF₂O(CF(CF₃)CF₂O)₂CF(CF₃)COOCH₃

and the like, but from the perspective of polymerization reactivity,

CH₂=CFCF₂OCF(CF₃)CN,

CH₂=CFCF₂OCF(CF₃)CF₂OCF(CF₃)CN,

### <Structure 36>

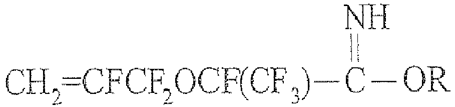

,

### <Structure 37>

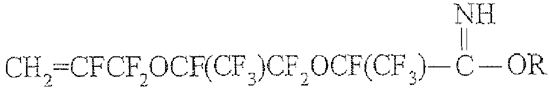

CH₂=CFCF₂OCF(CF₃)COOH,

CH₂=CFCF₂OCF(CF₃)CF₂OCF(CF₃)COOH,

CH₂=CFCF₂OCF(CF₃)COOCH₃,

and CH₂=CFCF₂OCF(CF₃)CF₂OCF(CF₃)COOCH₃
are preferred.

Specific examples of monomers as depicted in generic Formula (26) that can be named include:

CF₂-CFCF₂OCF(CF₃)CF₂OCF(CF₃)CN,

### <Structure 38>

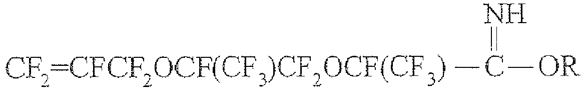

CF₂=CFCF₂OCF(CF₃)CF₂OCF(CF₃)COOH,

CF₂=CFCF₂OCF(CF₃)CF₂OCF(CF₃)COOCH₃,

and the like, but from the perspective of reactivity,

CF₂=CFCF₂OCF(CF₃)CF₂OCF(CF₃)CN and

### <Structure 39>

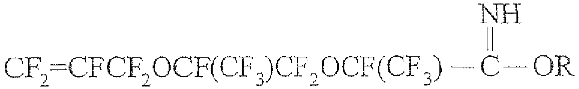

are preferred, and from the perspective of ease of manufacture,
CF₂=CFCF₂OCF(CF₃)CF₂OCF(CF₃)COOH and

CF₂=CFCF₂OCF(CF₃)CF₂OCF(CF₃)COOCH₃

are preferred.

In addition, generally the aforementioned reactive functional groups when bonded to straight-chain alkylene groups such as -CF₂-CN or -CF₂-COOR are more preferred for exhibiting higher reactivity as compared to when they are bonded to branched-chain alkylene groups such as -CF(CF₃)-CN or -CF(CF₃)-COOR.

Furthermore, in the PTFE that relates to this embodiment, at the same time that the abovementioned reactive functional group-containing monomers are used as a component of the copolymer, any desired monomer can also be used as a component of the copolymer. Examples of monomers other than those that provide a crosslinking site that can be named, without being limiting in any particular way, include fluorine-containing monomers other than TFE or non-fluorine-containing monomers or the like. Copolymerizable monomers of this type can also possess functional groups that do not react with crosslinking agents. Examples of functional groups that do not react with crosslinking agents that can be named include hydroxyl groups, sulfonic acid groups, phosphoric acid groups, sulfonimide groups, sulfonamide groups, phosphorimide groups, phosphoramide groups, carboxamides groups, carboximide groups and the like. If monomers with functional groups that do not react with crosslinking agents are used as copolymer components, effects such as improved adhesiveness and improved dispersibility are anticipated. Additionally, when monomers that do not contain such functional groups are introduced as copolymer components, they can be used to carry out adjustments in the particle size, adjustments of the melting point, adjustments of the physical properties and the like. Moreover, examples of the aforementioned "fluorine-containing monomers" that can be named include fluoroolefins, cyclic fluorinated monomers, fluorinated alkyl vinyl ethers and the like. Examples of the aforementioned fluoroolefins that can be named include hexafluoropropylene (HFP), vinyl fluoride, vinylidene fluoride (VDF), trifluoroethylene, chlorotrifluoroethylene, hexafluoroisobutylene, perfluorobutylethylene and the like. In addition, examples of the aforementioned cyclic fluorinated monomers that can be named include perfluoro-2,2-dimethyl-1,3-dioxole (PDD), perfluoro-2-methylene-4-methyl-1,3-dioxolane (PMD) and the like. Additionally, examples of the aforementioned fluorinated alkyl vinyl ethers that can be named are represented by the generic formula CY⁷₂=CY⁸OR¹² or CY⁷₂=CY⁸(OR¹³)ₙOR¹² (where the Y⁷ can be the same or different and are H or F, Y⁸ is H or F, R¹² is an alkyl group with a functional group in the terminal position or an alkyl group with from 1 to 8 carbon atoms and where some or all of the hydrogen atoms can optionally be replaced by fluorine atoms, R¹³ can be the same or different and is an alkyl group with from 1 to 8 carbon atoms and where some or all of the hydrogen atoms can optionally be replaced by fluorine atoms, and n is an integer from 0 to 10). Furthermore, for example, the aforementioned fluorinated alkyl vinyl ether is preferably perfluoro(methyl vinyl ether) (PMVE), perfluoro(ethyl vinyl ether) (PEVE) or perfluoro(propyl vinyl ether) (PPVE). Moreover, the aforementioned "non-fluorine-containing monomers" are not limited in any particular way to those that are copolymerizable with the aforementioned TFE, and examples that can be named include hydrocarbon monomers and the like. The aforementioned hydrocarbon monomers can optionally possess any sort of substituent groups that can possess elements such as halogen atoms other than fluorine, oxygen, nitrogen or the like. Examples of the aforementioned hydrocarbon monomers that can be named include alkenes, alkyl vinyl ethers, vinyl esters, alkyl aryl ethers, alkyl aryl esters and the like.

Furthermore, regarding the "fluorine-containing monomers" or "non-fluorine-containing monomers", among those that are mentioned above, fluoroolefins or perfluoro(vinyl ethers) that are use to modify conventional PTFE are more preferred, and HFP, chlorotrifluoro ethylene, hexafluoroisobutylene, VDF, PMVE, PEVE and PPVE are particularly preferred. The level of modification, which can be any desired amount so long as that amount does not impair the original PTFE characteristics, in the case of fluoroolefins and based upon TFE as the required monomer, is preferably ≥0.01. mol%, more preferably ≥0.1 mol%, and is preferably ≤7 mol%, more preferably ≤5 mol%, and particularly preferably ≤2 mol%, and in the case of perfluoro(vinyl ethers) and based upon TFE as the required monomer, is preferably ≥0.01 mol%, more preferably ≥0.1 mol%, and is preferably ≤1 mol%.

The PTFE used in the present invention can be manufactured by conventional polymerization methods such as emulsion polymerization, suspension polymerization, solution polymerization and the like. Regarding the polymerization conditions such as the time period and temperature during the polymerization, a suitable decision can be made from consideration of the type of monomer and the like.

It is possible to use a broad range of emulsifying agents in the emulsion polymerization, but from the perspective of suppressing chain transfer reactions to the emulsifying agent molecule that arise during the polymerization, saline of carboxylic acids that possess fluorocarbon chains or fluoropolyether chains are preferred.

The polymerization initiators that can be used include persulfates such as ammonium persulfate (APS) and the like, or organic peracids such as disuccinic acid peroxide (DSP), diglutaric acid peroxide and the like, used singly or in the form of mixtures. In addition, the aforementioned polymerization initiators can be used together with reducing agents such as sodium sulfite and the like, for using materials in the redox series. More preferred are carboxyl groups or groups that generate a carboxyl group (examples that can be named include acid fluoride, acid chloride, -CF₂OH and the like, all of which generate a carboxyl group in the presence of water) that is preferably obtained at a site on the main chain terminal end. Concrete examples that can be named include ammonium persulfate (APS), potassium persulfate (KPS) and the like.

Additionally, conventionally-used chain transfer agents can be used to adjust the molecular weight. A compound that is used as such a chain transfer agent will constitute at least one from among the group that includes hydrocarbons, halogenated hydrocarbons and water-soluble organic compounds. The aforementioned chain transfer agent can optionally constitute any one of a hydrocarbon that does not include a halogenated hydrocarbon, a halogenated hydrocarbon that does not include a hydrocarbon, and a hydrocarbon and a fluorinated hydrocarbon, moreover one or two or more types of hydrocarbon, halogenated hydrocarbon, and water-soluble organic compound can be used. From the perspective of satisfactory dispersibility and homogeneity within the reaction system, the aforementioned chain transfer agent is preferably constituted from at least one selected from the group that includes methane, ethane, butane, HFC-134a, HFC-32, methanol and ethanol.

In addition, by furthermore utilizing compounds that contain iodine or bromine, a narrow molecular weight distribution can be obtained, and adjustment of the molecular weight will be easy. Examples of such chain transfer agents that possess iodine atoms that can be used are provided in the following list as the compounds represented by the Generic Formulas (27)∼(35).

I(CF₂CF₂)ₙI (27)

ICH₂CF₂CF₂(OCF(CF₃)CF₂)ₘOCF(CF₃)-Z³ (28)

ICH₂CF₂CF₂(OCH₂CF₂CF₂)ₘOCH₂CF₂-Z³ (29)

I(CF₂)ₙZ³ (30)

I(CH₂CF₂)ₙZ³ (31)

ICF₂CF₂OCF₂CF(CF₃)OCF₂CF₂-Z³ (32)

ICH₂CF₂CF₂OCH₂CF₂-Z³ (33)

ICF₂CF₂OCF₂CF₂-Z³ (34)

ICF₂CF₂O(CF₂)ₙOCF₂CF₂-Z³ (35)

(where in the formula, Z³ is any of the abovementioned functional groups, m is an integer from 0 to 5 and n is an integer ≥1) and the like. Among these, from the perspective of possessing a crosslinking site that can react with a crosslinking agent, the chain transfer agents represented by Generic Formulas (28) through (35) are preferred.

For the methods for isolating the polymer product from the mixture of polymerization reaction products obtained from emulsion polymerization, coagulation methods such as coagulation by acid treatment or coagulation by freeze-drying or ultrasound or the like can be employed, but the method of coagulation by mechanical power is preferred from the perspective of simplification of the process. In the method of coagulation by mechanical power, a conventional aqueous dispersion is diluted to a polymer concentration of 10-20 wt%, and after the pH has been adjusted according to the conditions, this is stirred vigorously in a vessel that is equipped with a stirrer. Additionally, the coagulation can also be carried out continuously through the use of an inline mixer or the like. Furthermore, if pigments for coloring or fillers for improving the mechanical properties are added before or during coagulation, it is possible to obtain a PTFE fine powder in which the pigments and fillers are uniformly mixed.

While it is in a moist powder state that is relatively nonflowable, and more preferably while it is maintained under stationary conditions, the drying of the coagulated crosslinkable PTFE can be carried out by employing a means such as reduced pressure, microwaves, heated air or the like. Friction within the powder, particularly at high temperature, generally exerts unfavorable effects on a PTFE fine powder. This is because even when there are small shearing forces on PTFE particles of this type, they will readily undergo fibrillation, which results in the loss of the original stable particle structure. The drying temperature is 10-250 °C, preferably 100-200 °C.

For the crosslinkable PTFE used in the present invention, groups such as metal salts or ammonium salts or the like of carboxyl groups that are present in the polymer product can be converted into carboxyl groups by subjecting the polymer product to an acid treatment. Suitable acid treatment methods can be washing with, for example, hydrochloric acid, sulfuric acid or nitric acid or the like, or the mixture system following polymerization reaction can be brought to a pH of ≤3 with these acids.

Moreover, carboxyl groups can be introduced to PTFE that contains iodine or bromine via acidification with fuming nitric acid.

Furthermore, as for methods to introduce cyano groups, carboxyl groups or alkoxycarbonyl groups, the methods described in WO 00/05959 can be used.

Furthermore, within the cases that possess the abovementioned chemical structures, the crosslinkable PTFE that relates to the present invention was limited to where the modulus of elongation prior to heat treatment was ≥ 100 MPa or the melt viscosity was ≥10⁸ poise.

### <Methods for manufacturing a powdered PTFE crosslinked body>

The powdered PTFE crosslinked body that relates to the present invention is obtained through the treatment of crosslinkable polytetrafluoroethylene as a powder under conditions that are thought to be suitable and appropriate. In the case where a cyano group or a cyano group derivative is used, a powdered crosslinked body can be obtained through a heat treatment at ≥200 °C. In this case, for the crosslinking reaction treatment, it is preferable for the crosslinkable polytetrafluoroethylene powder to undergo prolonged heating at ≥270 °C in a circulating air oven or the like, and in order to accelerate the reaction rate, heating at 270 °C - 320 °C for a period of 1-50 hours is more preferable. In addition, even when not passing through the process for obtaining the powdered crosslinked body previously, the crosslinking reaction can be promoted in the molding and baking processes. Additionally, when a carboxylic acid or a carboxylic acid derivative is used, the powdered crosslinked body can also be obtained through a heat treatment at ≥200 °C. In this case, for the crosslinking reaction treatment, it is preferable for the crosslinkable polytetrafluoroethylene powder to undergo prolonged heating at ≥250 °C in a circulating air oven or the like, and in order to accelerate the reaction rate, heating at 250 °C - 320 °C for a period of 1-30 hours is more preferable. Even not passing through the process for obtaining previously the powdered crosslinked body, the crosslinking reaction can be promoted in the molding and baking processes.

Furthermore, it is satisfactory if the heating temperature is not constant, and it can be changed incrementally.

### <Manufacturing methods for a molded body>

Molded bodies can be obtained from crosslinkable PTFE or powdered PTFE crosslinked bodies in a satisfactory manner by using conventional methods, and examples of such known methods that can be named include compression molding, ram extrusion molding, paste extrusion molding and the like. In the case where the molded body is obtained by compression molding methods, molding by hot coining methods is also possible, but molding by free baking methods that have higher productivity than hot coining methods is also possible. A metal mold is filled with the abovementioned crosslinkable PTFE or powdered PTFE crosslinked body, and after a preliminary molded body is obtained through compression with 2-100 MPa of pressure, preferably with 10-70 MPa of pressure, the obtained preliminary molded body can be baked in a circulating air oven at a temperature from the melting point to 420 °C, preferably from the melting point to 380 °C for a period of from 10 minutes to 10 days, preferably from 30 minutes to 5 hours. In this case, any arbitrary rates of temperature increase or cooling can be used, but 10-100 °C/hour is preferred, and 20-60 °C/hour is more preferred. Moreover, for example, an incremental temperature increase adjustment method can be employed, with a higher temperature increase rate up to 300 °C and a lower temperature increase rate at ≥300 °C, and a lower cooling rate down to 300 °C and a higher cooling rate at ≤300 °C.

By forming crosslinks in the crosslinkable PTFE that relates to the present invention, it is possible to obtain the PTFE molded body that relates to the present invention. The PTFE molded body of the present invention maintains the conventional strength, crystallinity and surface characteristics and the like without any anisotropy or heterogeneity, and is more difficult to deform than conventional PTFE resin. In addition, this PTFE molded body has superior heat resistance and chemical resistance.

The PTFE crosslinked body of the present invention can be used as a powder or as a molded body. A specific example that can be named of a use for the powder is as a modifying material. PTFE powder being employed as a modifying material and added to general-use resins, in particular engineering plastics, or fluororesins or fluororubbers is known from disclosures in patent documents such as Japanese Published Unexamined Patent Application S60-110749, Japanese Published Unexamined Patent Application S62-72751, Japanese Published Unexamined Patent Application 2000-109668, Japanese Published Unexamined Patent Application H11-269350, Japanese Published Unexamined Patent Application H10-9270 and the like, but it is also true that the powdered PTFE crosslinked body that relates to the present invention can be used in combination as a modifying material in suitable applications. When a PTFE crosslinked body is used as a modifying material in powder form, it is preferable for the PTFE to have a low molecular weight.

Additionally, the powdered PTFE crosslinked body that relates to the present invention can be dispersed in or blended in another material such as a molding resin or elastomer or the like to improve the flame retardant properties, non-adhesive properties, sliding characteristics, water/oil repellency, electrical characteristics, resistance to stains, corrosion resistance, weather resistance, physical properties and the like. Furthermore, in place of the powdered PTFE crosslinked body, after the crosslinkable PTFE is dispersed in or blended in another material, this dispersion product or blended product can also be heated to crosslink the PTFE.

Specific examples of other materials that can be named, without being limiting in any way, include general-use plastics such as polyethylene resin, polypropylene resin, ethylene-vinyl acetate copolymer resins, ethylene-ethyl acrylate copolymer resins, ethylene-vinyl alcohol copolymer resins, poly(cycloolefin) resins, poly(isobutylene) resins, polyolefin resins, poly(vinyl chloride) resins, polystyrene resins and the like, engineering plastics such as poly(methylpentene) resins, acrylonitrile-styrene copolymer resins (AS resins), styrene-methyl methacrylate copolymer resins, acrylonitrile-butylene-styrene copolymer resins (ABS resins), acrylonitrile-acrylate-styrene copolymer resins (AAS resins), acrylonitrile-ethylene-propylene-diene rubber-styrene copolymer resins (AES resins), acrylonitrile-styrene-acrylate copolymer resins (ASA resins), silicone-acrylonitrile-styrene copolymer resins (SAS resins), acrylic resins, methacrylic resins, polyamide resins, polycarbonate resins, polyacetal resins, poly(phenylene ether) resins, poly(butylene terephthalate) resins, poly(ethylene terephthalate) resins, poly(ethylene naphthalate) resins, poly(phenylene sulfide) resins, fluororesins, poly(ether sulfone) resins, poly(ether imide) resins, poly(ether ketone) resins, poly(ether ether ketone) resins, polyimide resins, polyarylate resins, aromatic polyester resins, poly(phenylene sulfide), polysulfone resins, aromatic poly(ester amide) resins, aromatic azomethine resins, poly(arylene sulfide) resins, polyketone resins, poly(amide-imide) resins, poly(ether nitrile) resins and the like, or fluororesins such as PTFE, poly(chlorotrifluoroethylene), tetrafluoroethylene-perfluoro(alkyl vinyl ether) copolymers (PFA), tetrafluoroethylene-hexafluoropropylene copolymers (FEP) and the like, or fluororubbers such as tetrafluoroethylene-perfluoro(alkyl vinyl ether) copolymer elastomers, vinylidene fluoride- hexafluoropropylene copolymer elastomers , vinylidene fluoride-tetrafluoroethylene-hexafluoropropylene copolymer elastomers and the like. Moreover, other materials such as epoxy resins, phenolic resins, urea resins, melamine resins, unsaturated polyester resins, alkyd resins, diallyl phthalate resins and the like, as liquids before curing, solutions, solid powders and the like can also be used. In such cases, it is possible to obtain a molded body through a curing process. In the case of employing the powdered PTFE crosslinked body of the present invention as a modifying material, the amount added that is based on the other component is preferably 1-80 wt%, and is furthermore preferably 5-50 wt%.

Furthermore, in the present invention, the resin that is the dispersing object or the blending object of the powdered PTFE crosslinked body or crosslinkable PTFE composition of matter, a thermoplastic resin with a crystal melting point or a glass transition temperature of ≥150 °C is included as preferred. Examples of thermoplastic resin are polyacetals resins, polyamide resins, polycarbonate resins, poly(phenylene ether) resins, aromatic polyester resins, aromatic poly(ester amide) resins, aromatic azomethine resins, poly(arylene sulfide) resins, polysulfone resins, poly(ether sulfone) resins, polyketone resins, poly(ether ketone) resins, poly(ether imide) resins, poly(amide-imide) resins, poly(methylpentene) resins, poly(ether nitrile) resins and the like.

Examples of the preferred resins among these that can be named as preferred objects of the present invention include (1) those with high heat resistance, in other words, in the case that the powdered PTFE crosslinked body is blended, it is necessary that the heat stability of the blended material not be reduced, and since the heat resistance of the thermoplastic resin itself will be increased, with the aim of improving the impact resistance and chemical resistance, generic modifying agents and additives are used, and since the heat resistance of the blend is ultimately reduced thereby, the addition of a fluorine-containing resin with high heat resistance is desirable in such a resin, (2) a material with superior mechanical strength and dimensional stability, where a fluororesin can improve such physical properties, (3) a material with superior moldability, where blended materials with a fluorine-containing resin can provide superior processability and the like, for example aromatic polyester resins, polyamide resins, poly(amide-imide) resins, poly(arylene sulfide) resins, polyketone resins, poly(ether nitrile) resins, polycarbonate resins, poly(phenylene ether) resins, polysulfone resins, poly(ether imide) resins, polyimide resins and the like.

More specifically, poly(arylene sulfide) resins that are strongly desirable in general for improving the impact resistance without losing the heat resistance and chemical resistance, polyamide resins that are desirable for improved solvent resistance and particularly for gasoline resistance and the like when used as materials for automotive components, aromatic polyester resins the addition of which can be expected to increase the moldability and mechanical physical properties of the fluororesin, among such resins, liquid crystalline polyesters, which have high elasticity modulus and superior molding process workability and dimensional stability and form an anisotropic melt phase that can be expected to exhibit extensive increases in the mechanical physical properties, moldability, dimensional stability and deflection temperature under load by increasing the compatibility with fluororesins, are particularly preferred objects.

On the other hand, when the affinity between the powdered PTFE crosslinking body that relates to the present invention and the thermoplastic resin are considered, since poly(phenylene sulfide) resins contain thiolate groups (or thiol groups), polyamide resins contain amino groups and carboxyl groups as well as amide bonds, aromatic polyester resins contain hydroxy groups and carboxyl groups as well as ester bonds, there is higher affinity with the functional groups in the powdered PTFE crosslinking body of the present invention, and its significance is also said to be a preferred object.

Furthermore, since it is known that functional groups are exposed on the surface of the powdered PTFE crosslinking body that relates to the present invention, when these functional groups react with a portion of the main chains or terminal ends of the thermoplastic resin, its functional groups and the portion of the thermoplastic resin functional groups cause a chemical reaction to occur and its reaction products act as an agent to improve the compatibility of the blend that contains unreacted material, and it can be assumed interfacial compatibility or interfacial adhesion will be observed with the thermoplastic resin and the like. Furthermore, when the powdered PTFE crosslinked body is a crosslinkable PTFE, it can be assumed that this tendency is strengthened further.

The mechanism by which the favorable reciprocal dispersibility due to the blending of thermoplastic resins with powdered PTFE crosslinked bodies as above is unclear, but this does not limit the present invention in any way.

In order to have high compatibility or reactivity with the powdered PTFE crosslinked body of the present invention, modification of the thermoplastic resin by the law of the art is not excluded from the present invention. Additionally, resin blends of the present invention can also contain resin components other than a powdered PTFE crosslinked body and a thermoplastic resin.

Without limiting the present invention in any particular way, the poly(phenylene sulfide) resins that are subject blends of the powdered PTFE crosslinked body can be obtained by known methods such as those described in Japanese Published Examined

Patent Application S45-3368, and those that contain ≥ 70 mol% of the repeating unit represented by the formula below,

### <Structure 40>

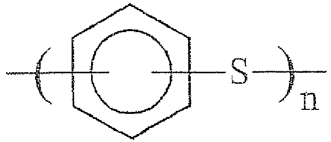

. Furthermore, a poly(phenylene sulfide) resin that contains ≥70 mol% of the p-phenylene sulfide repeating unit is particularly preferred. In this case, without any limitation that the remaining repeating unit be a copolymerizable unit, examples that can be named include the o-phenylene sulfide unit, the m-phenylene sulfide unit, diphenyl sulfide ether units, diphenyl sulfide sulfone units, diphenyl sulfide ketone units, biphenyl sulfide units, naphthalene sulfide units, trifunctional phenylene sulfide units and the like. For these copolymers, either block copolymers or random copolymers are satisfactory.

Specific examples of preferred poly(phenylene sulfide) resins that can be named include poly(p-phenylene sulfide) resins, poly(p-phenylene sulfide)-poly(m-phenylene sulfide) block copolymer resins, poly(p-phenylene sulfide)-polysulfone block copolymer resins, poly(p-phenylene sulfide)-poly(phenylene sulfide sulfone) copolymer resins and the like.

Moreover, these can be straight-chain types, they can be oxygen crosslinked in the presence of oxygen, or they can have undergone heat treatment in the presence of an inert gas, and furthermore they can be mixtures of such structures.

In addition, in order to raise the compatibility of the powdered PTFE crosslinked body of the present invention, highly reactive functional groups can be introduced into the poly(phenylene sulfide) resin. The amino group, carboxylic acid group, hydroxyl group and the like are suitable as introduced functional groups, and examples of the methods for introduction that can be named include copolymerization with a halogenated aromatic compound that contains such a functional group and macromolecular reaction between the poly(phenylene sulfide) resin and a small molecular weight compound that contains the functional group.

Additionally, a reduction in sodium ions by carrying out a deionizing treatment (acid rinse or hot water rinse) of the poly(phenylene sulfide) resin is also satisfactory.

Resin blends constituted from powdered PTFE crosslinked body and poly(phenylene sulfide) resin obtained as described above can provide molded bodies with superior mechanical properties and particularly impact resistance that are not obtained when only fluorine-containing resins that do not contain simple functional groups are blended.

Moreover, since the heat resistance, chemical resistance and sliding characteristics naturally possessed by fluorine-containing resins and the heat resistance and mechanical properties naturally possessed by poly(phenylene sulfide) resins can be provided simultaneously, these resin blends can be particularly useful as molding materials, by employing the heat resistance and electrical characteristics in electric and electronic components, employing the sliding characteristics in automotive components, employing the chemical resistance in piping for chemical plants and gear components for valve pumps and the like.

Furthermore, polyamide resins with their superior high strength, high toughness, processability and oil resistance find wide application in hoses, tubes, pipe and the like. However, polyamide resins are weaker against alcoholic solvents, and in particular have inferior gasohol resistance when gasoline that contains lower alcohols is used, and since this gives rise to an inferior material due to diminished strength when the volume swelling and fuel permeability become significant, improvements are needed from this perspective. Furthermore, it is necessary to reduce the wear coefficient.

However, by blending this polyamide resin, with the powdered PTFE crosslinked body that relates to the present invention, and moreover by adding the powdered PTFE crosslinked body or the crosslinkable PTFE composition of matter that relates to the present invention to blends of polyamide resin with fluororesin that does not contain functional groups, it is possible to obtain a resin wherein the solvent resistance and gasoline resistance of the polyamide resin has been improved.

Polyamide resins that can be used are manufactured by condensation of linear diamines represented by the generic formula below:

H₂N-(CH₂)_{p'}-NH₂

(where in the formula, p" is an integer from 3 to 12), with linear carboxylic acids represented by the formula below:

HO₂C-(CH₂)_{q"}-CO₂H

(where in the formula, q" is an integer from 2 to 12), or are manufactured by ring-opening polymerization of lactams. Preferred examples of these polyamide resins that can be named include nylon-6,6, nylon-6,10, nylon-6,12, nylon-4,6, nylon-3,4, nylon-6,9, nylon-6, nylon-12, nylon-11, nylon-4 and the like. In addition, it is possible to use polyamide-type copolymers such as nylon-6/6,10, nylon-6/6,12, nylon-6/4,6, nylon-6/12, nylon-6/6,6, nylon-6/6,6/6,10, nylon-6/4,6/6,6, nylon-6/6,6/6,12, nylon-6/4,6/6,10, nylon-6/4,6/12 and the like.

Furthermore, it is also possible to include nylon-6/6,T (T is a terephthalic acid component), half-aromatic polyamides obtained from aromatic dicarboxylic acids such as terephthalic acid, isophthalic acid and meta-xylenediamine or alicyclic diamines, and polyamides obtained from meta-xylenediamine with linear carboxylic acids.

The above-described resin blends constituted from a powdered PTFE crosslinked body and a polyamide resin or resin blends from the addition of a powdered PTFE crosslinked body to a blend of a polyamide resin with a fluororesin that does not contain functional groups can provide molded bodies with chemical resistance, low-temperature impact resistance and mechanical characteristics that cannot be obtained when only fluororesins that do not contain functional groups are simply blended. In particular, these are useful as materials that have superior impermeability and chemical resistance toward improved gasolines that contain alcohols (for example, methanol, ethanol and the like), methyl t-butyl ether and the like, or acids and the like, and the molded bodies are useful as hoses, tubes, pipes, seals, gaskets, packings, sheets, films and the like. Additionally, useful materials can be obtained that have the impermeability and chemical resistance particularly against gasoline and gasoline methanol mixtures that is required for automotive components, for example fuel piping hoses, tubes, gaskets and the like.

By replacing the conventional fluorine-containing resins with a powdered PTFE crosslinked body that relates to the present invention being blended with a heat-resistance thermoplastic resin, among which in particular the aromatic polyester resins or polycarbonate resins, moreover when blending a conventional fluorine-containing resin with an aromatic polyester resins or polycarbonate resin and adding a powdered PTFE crosslinked body, it is possible to obtain a resin blend that improves on the mechanical characteristics, deflection temperature under load and dimensional stability possessed by the fluororesin.

At the same time, polycarbonates are widely used in automobiles or in the construction field because of characteristics such as mechanical strength, impact resistance, weather resistance and the like, but they have the disadvantage that the chemical resistance, particularly the alkali resistance and the solvent resistance are inferior.

The same method that improved the chemical resistance of the polyamide resins can be used, and when the powdered PTFE crosslinked body that possesses hydroxy groups from among the powdered PTFE crosslinked bodies that relate to the present invention is blended with the polycarbonate, an improved resin blend can be obtained in which the mechanical physical properties are remarkably not diminished and the chemical resistance is more effective.

Examples of the aromatic polyester resins that are used in the resin blends that relate to the present invention that can be named include the condensation products between dibasic acids such as adipic acid, terephthalic acid, 2,6-naphthalenedicarboxylic acid, 4,4'-biphenyldicarboxylic acid and the like with divalent alcohols such as ethylene glycol, trimethylene glycol, tetramethylene glycol, pentamethylene glycol, hexamethylene glycol, 1,4-cyclohexanedimethanol, bisphenol A and the like (for example, poly(ethylene terephthalate resin), poly(butylene terephthalate resin), poly(1,4-cyclohexanedimethylene terephthalate) resin, poly[2,2-propane-bis(4-phenyl-tere/isophthalate)] resin and the like) and aromatic polyesters formed from an anisotropic molten phase (liquid crystal copolyester) and the like.

Moreover, the polycarbonate resin that is used in the resin blend that relates to the present invention can be obtained through the reaction of a bisphenol compound with phosgene or a carbonate diester. A particularly preferred bisphenol compound is 2,2-bis(4-hydroxyphenyl)propane (abbreviated below as bisphenol A), but bisphenol A can be substituted in whole or in part by other bisphenol compounds. Examples of bisphenol compounds other than bisphenol A that can be named include hydroquinone, resorcinol, 4,4'-dihydroxydiphenyl, bis-(4-hydroxyphenyl)alkanes, bis-(4-hydroxyphenyl)cycloalkanes, bis-(4-hydroxyphenyl) sulfide, bis-(4-hydroxyphenyl) ether, bis-(4-hydroxyphenyl)ketone, bis-(4-hydroxyphenyl)sulfone, bis-(4-hydroxyphenyl)sulfoxide, or any of the foregoing with alkyl substituents, aryl substituents, halogen substituents and the like.

Furthermore, among these, and depending on their orientation, liquid crystal polyesters will have the most superior performance in mechanical properties such as strength and elastic modulus, thermal properties such as deflection temperature under load, dimensional stability and the like, and will exhibit high fluidity in the melt. Furthermore, liquid crystal polyesters are oriented in a resin blend by melt blending with other resins and can provide the same superior characteristics as mentioned above, can be the most preferred objects to obtain improved compositions of matter or thermoplastic elastomer compositions of matter with the mechanical properties, deflection temperature under load, dimensional stability, and moldability of fluororesins. For the liquid crystal polyesters used in the present invention, examples that can be named include the liquid crystal copolyesters that are constituted from components that are selected from one or two and more types of aromatic dicarboxylic acid or alicyclic dicarboxylic acid, one or two and more types of aromatic diol, alicyclic diol or aliphatic diols and one or two and more types of aromatic hydroxycarboxylic acid. Examples of representative compositions that can be named include para-hydroxybenzoic acid, biphenyldiol and terephthalic acid as the main components (for example, Econol E2000, E6000 or E7000 from Sumitomo Chemical Co., Ltd.; Xydar RC/FC400, 300 from Nippon Petrochemicals Co., Ltd.; the Vectra C series from Polyplastics Co., Ltd.; UENO LCP2000 from Ueno Chemical Industries Ltd.; Idemitsu LCP300 from Idemitsu Petrochemicals Co., Ltd.); para-hydroxybenzoic acid and 6-hydroxynaphthoic acid as the main components (for example, Victrex SRP from ICI Japan Co., Ltd.; UENO LCP1000 from Ueno Chemical Industries Ltd.; the Vectra A series from Polyplastics Co., Ltd.; Novaculate E324 from Mistubishi Chemicals Co., Ltd.; Idemitsu LCP300 from Idemitsu Petrochemicals Co., Ltd.; Rodran LC-5000 from Unitika, Ltd.); and, para-hydroxybenzoic acid, terephthalic acid and aliphatic diols as the main components (for example, Novaculate E310 from Mistubishi Chemicals Co., Ltd.; Idemitsu LCP100 from Idemitsu Petrochemicals Co., Ltd.; Rodran LC-3000 from Unitika, Ltd.; and, X7G from Eastman Kodak Co., Ltd.).

The resin blends with the abovementioned improved mechanical properties, deflection temperature under load, dimensional stability and moldability of the fluorine-containing resins among the resin blends that contain aromatic polyester resins and polycarbonate resins obtained as described above, when combined with the superior heat resistance, chemical resistance and electrical properties of the added fluorine-containing resin itself, the effect is to provide particularly useful materials for electrical and electronic components that require dimensional stability, heat resistance and electrical properties, for example connectors, chips, carriers, sockets, printed circuit boards, wire coating materials, products related to semiconductors that require chemical resistance; and, in particular the large scale wafer baskets, or valves and chemical pump components where there are problems of moldability and insufficient strength with the fluororesin, in mechanical systems that require heat resistance and sliding characteristics and the like, for example the components that surround the fuel in automobiles, gears, bearings and the like. In addition, such resin blends naturally also have the moldability and recyclability for injection molding and the like as thermoplastic elastomers.

Consequently, the resin blends that relate to the present invention find application as useful materials for tubes, chemical stoppers, gaskets, syringes and the like in the clinical and biochemical fields; tubes, O-rings, sealing materials and the like in the field of semiconductor production; heat resistant electrical wire coating materials, sealing materials and the like in the electrical and electronics fields; hoses, seals and the like in food industries field; hoses, tubes, gaskets, constant velocity joint boots, rack-and-pinion boots and the like for fuel system in the automobile-related fields; pressure resistant hoses, diaphragms, packings, gaskets, hoses and the like in the chemical industry field; and, sealing materials in the construction field; and the like.

Furthermore, the resin blend that relates to the present invention, within the scope wherein its effect is not damaged, can contain a blending quantity normally of 1-30 wt% based on the main composition of matter that can include, for example, fibrous reinforcing fillers such as glass fibers, carbon fibers, aramide fibers, graphite whiskers, potassium titanate whiskers, basic magnesium sulfate whiskers, magnesium whiskers, magnesium borate whiskers, calcium carbonate whiskers, calcium sulfate whiskers, lead oxide whiskers, aluminum borate whiskers, alumina whiskers, silicon carbide whiskers, silicon nitride whiskers, wollasonite, zonolite, sepiolite, plaster fibers, slag fibers and the like, inorganic fillers such as carbon powder, graphite powder, calcium carbonate powder, talc, mica, clay, glass beads and the like, heat resistant resins such as polyimide resins and the like, solid lubricants such as molybdenum disulfide and the like, colorants or other commonly used inorganic or organic fillers such as flame retardants and the like. At this time, depending on the presence of unreacted functional groups contained in the resin blend that relates to the present invention, it is also possible to obtain a case where the filler effect is much improved.

Additionally, by using the crosslinkable PTFE or the powdered PTFE crosslinked body that relate to the present invention, it is possible for a PTFE molded body with physical properties, sliding characteristics, heat resistance and weather resistance that are superior to that of a molded body that uses conventional PTFE to be obtained easily. Thus, such a PTFE molded body can be employed in broad applications such as packings, gaskets, tubes, linings, coatings, insulating tapes, bearings, airdome roof membranes, gas-liquid separation membranes, separators, support membranes and the like. Examples of shapes of the molded body that can be named, without any particular limitations, include tube, film, sheet, fiber, porous membrane shapes and the like. For molding methods to achieve such shapes, generally known methods can be used. Specifically, these include methods for crosslinking PTFE after the crosslinkable PTFE has been molded, methods for molding powdered PTFE crosslinked bodies, and the like, but a suitable selection of such methods can be made that corresponds to the circumstances. For example, when molding into fibers, the crosslinking treatment can be applied after the molded body of the crosslinkable PTFE has been drawn and molded into a fiber, or the PTFE molded body after the crosslinking treatment can be drawn into fibers. Moreover, if the present crosslinkable PTFE is used in lining or coating materials for another material, methods that can be employed include a method for crosslinking after an un-crosslinked PTFE dispersion is applied, or a method for applying an already crosslinked PTFE dispersion, or a method for crosslinking the crosslinkable PTFE after the lining or coating has been applied, or a method for applying a lining or coating of an already crosslinked PTFE molded body, or the like. However, in general, it is preferable to carry out the crosslinking after the un-crosslinked body is molded.

In the present invention, particularly in fields where high purity and freedom from contamination are not required, the PTFE molded body can be blended with common additives, depending on the requirements, and for example it can be blended with fillers, processing aids, plasticizers, colorants, stabilizers, bonding aids and the like, and the aforementioned materials can be blended with one or more different general use crosslinking agents or crosslinking aids.

The crosslinking PTFE that relates to the present invention, depending on the requirements, can be subjected further to other treatments after the crosslinking treatment. By applying further treatments to the PTFE after the crosslinking treatment, a plurality of techniques for improving specific capabilities can be introduced, but the PTFE crosslinked body of the present invention can also have its capabilities improved through the employment of various suitable known methods. For example, if it is desired to impart a hydrophilic property to the PTFE crosslinked body of the present invention, (1) the PTFE crosslinked body can be irradiated with radiation, lasers, electron beams, plasma, corona discharge and the like; (2) the PTFE crosslinked body can be reduced electrochemically or with a Li metal/naphthalene complex; (3) surfactants can be added to the PTFE crosslinked body; (4) the PTFE crosslinked body can be impregnated with hydrophilic macromolecules such as poly(vinyl alcohol), poly(ethylene glycol) or the like; (5) metal oxides can be attached to the PTFE crosslinked body; (6) the PTFE crosslinked body can be mixed and loaded with inorganic powders.

Working examples of the present invention are described below.

### <WORKING EXAMPLES>

### (1) Methods for synthesizing PTFE that contains reactive functional groups.

### (Synthesis Example 1)

To a 6-L stainless steel reaction vessel equipped with a stirrer was added 3,560 g of deionized water, 94 g of paraffin wax and 5.4 g of an ammonium perfluorooctanoate dispersant. Next, while the reaction vessel contents were being vacuumed and heated to 70 °C at the same time that the TFE monomer was being charged, the interior of the reaction vessel was purged to eliminate oxygen. Afterward, 0.17 g of ethane gas and 15.2 g of perfluoro[3-(1-methyl-2-vinyloxy-ethoxy)propionic acid (abbreviated below as CBVE) were added to the reaction vessel, and the contents were stirred at 280 rpm. TFE monomer was charged to the reaction vessel until it was pressurized to 0.73 MPa. A solution of 0.36 g of ammonium persulfate (APS) initiator dissolved in 20 g of deionized water was charged to the reaction vessel, which was pressurized to 0.83 MPa. After the initiator was introduced, the occurrence of a pressure drop and initiation of polymerization were observed. TFE monomer was charged to the reaction vessel to maintain the pressure, and the polymerization was continued until a total of approx. 1.1 kg of TFE monomer had reacted. Following this, the reaction vessel was evacuated, and the contents were taken out and cooled. The supernatant of paraffin wax was removed from the PTFE aqueous dispersion.

The concentration of the solids fraction of the PTFE aqueous dispersion obtained was 23.5 wt%, with an average primary particle diameter of 0.08 µm. Furthermore, for this average primary particle diameter, the transmittance of incident 550 nm light obtained when an aqueous dispersion of the PTFE with a 15 wt% solids fraction was prepared and introduced into the prescribed cell, and after a transmission electron microscope photograph was used to measure the unidirectional diameter and to calculate the correlation relationship with the numerical average primary particle diameter, the abovementioned transmittance measured for the sample obtained was used to make the determination by fitting it to the abovementioned correlation relationship (calibration curve method).

The aqueous PTFE dispersion was diluted with deionized water to give an approx. 15 wt% solids concentration, and a gel was formed under high-speed stirring conditions. The gelled powder was dried at 145 °C for 18 hours. The level of CBVE modification of the PTFE powder at this time was 0.26 mol%. Furthermore, the level of modification was measured with a ¹⁹F-MAS-NMR (Bruker), by employing the following measurement conditions - probe diameter: 4.0 mm; spin rate during measurement: 13-15 KHz; ambient atmosphere: nitrogen; measurement temperature: 150 °C. The TFE-derived peak and modifying agent-derived peak (peak at -77 to -88 ppm) were detected, and this relative peak area was determined to calculate level of modification. In addition, this PTFE powder was heated up to 380 °C, but the PTFE powder did not exhibit any fluidity.

### (Synthesis Example 2)

The polymerization was carried out in the same manner as for Synthesis Example 1, except that the 15.2 g of CBVE from Synthesis Example 1 was 14.6 g of perfluoro[3-(1-methyl-2-vinyloxyethoxy)propionitrile (abbreviated below as CNVE).

This time, the concentration of the solids fraction of the PTFE aqueous dispersion obtained was 23.1 wt%, with an average primary particle diameter of 0.17 µm. Additionally, this time the level of CNVE modification in the PTFE powder was 0.14 mol%. Moreover, this PTFE powder was heated up to 380 °C, but the PTFE powder did not exhibit any fluidity.

### (Synthesis Example 3)

To a 6-L stainless steel reaction vessel equipped with a stirrer was added 3,380 g of deionized water. Next, while the reaction vessel contents were being vacuumed and heated to 70 °C, at the same time that the TFE monomer was being charged, the interior of the reaction vessel was purged to eliminate oxygen. Afterward, 0.51 g of ethane gas and 15.2 g of CBVE were added to the reaction vessel, and the contents were stirred at 700 rpm. TFE monomer was charged to the reaction vessel until it was pressurized to 0.73 MPa. A solution of 0.68 g of APS initiator dissolved in 20 g of deionized water was charged to the reaction vessel, which was pressurized to 0.83 MPa. After the initiator was introduced, the occurrence of a pressure drop and initiation of polymerization were observed. TFE monomer was charged to the reaction vessel to maintain the pressure, and the polymerization was continued until a total of approx. 0.8 kg of TFE monomer had reacted. Then, after the reaction vessel was evacuated and was cooled to room temperature, the PTFE powder obtained was washed with deionized water and filtered.

The PTFE powder obtained was dried at 145 °C for 18 hours. The level of CBVE modification of the PTFE powder at this time was 0.45 mol%. In addition, this PTFE powder was heated up to 380 °C, but the PTFE powder did not exhibit any fluidity.

### (Synthesis Example 4)

The polymerization was carried out in the same manner as for Synthesis Example 1, except that the 0.17 g of ethane gas as in Synthesis Example 1 was replaced with 0.03 g of ethane gas, and the 15.2 g of CBVE was replaced with 15.7 g of perfluoro[methyl 3-(1-methyl-2-vinyloxyethoxy)propionate] (abbreviated below as RVEE).

This time, the concentration of the solids fraction of the PTFE aqueous dispersion obtained was 23.8 wt%, with an average primary particle diameter of 0.18 µm. Additionally, the level of RVEE modification of the PTFE powder at this time was 0.20 mol%. Moreover, this PTFE powder was heated up to 380 °C, but the PTFE powder did not exhibit any fluidity.

### (Synthesis Example 5)

The polymerization was carried out in the same manner as in Synthesis Example 3, except that the ethane gas as in Synthesis Example 3 was not added, and the 15.2 g of CBVE was replaced with 14.6 g of CNVE. The PTFE powder obtained at this time was dried at 135 °C for 18 hours after a coarse pulverization. Following this, it was pulverized to an average particle diameter of 10-150 µm using a P-14 Rotor Speed mill (Fritsch Japan Co., Ltd), to obtain a PTFE powder. At this time the level of CNVE modification in the PTFE powder was 0.15 mol%.

### (Synthesis Example 6)

The polymerization was carried out in the same manner as in Synthesis Example 3, except that the ethane gas as in Synthesis Example 3 was not added, and the 15.2 g of CBVE was replaced with 30.4 g of CBVE, and the 0.68 g of APS was replaced with 0.07 g. The PTFE powder obtained at this time was dried at 145 °C for 18 hours after a coarse pulverization. Following this, it was pulverized to an average particle diameter of 10-150 µm using a P-14 Rotor Speed mill (Fritsch Japan Co., Ltd), to obtain a PTFE powder. The level of CBVE modification of the PTFE powder at this time was 0.98 mol%.

### (Synthesis Example 7)

The polymerization was carried out in the same manner as in Synthesis Example 3, except that the ethane gas as in Synthesis Example 3 was not added, and the 15.2 g of CBVE was replaced with 15.7 g of RVEE, and the 0.68 g of APS was replaced with 0.07 g. The PTFE powder obtained at this time was dried at 160 °C for 18 hours after a coarse pulverization. Following this, it was pulverized to an average particle diameter of 10-150 µm using a P-14 Rotor Speed mill (Fritsch Japan Co., Ltd), to obtain a PTFE powder. The level of RVEE modification of the PTFE powder at this time was 0.36 mol%.

### (2) Preparation of the powdered PTFE crosslinked body and the PTFE molded body as well as physical property measurements

### <Working Example 1>

The PTFE powder obtained in Synthesis Example 1 was placed in a circulating air oven at 300 °C, and after this was maintained for a period of 24 h, it was taken out and cooled to room temperature to obtain the powdered PTFE crosslinked body.

### (Measurement of the abrasion resistance)

A 42 g sample of the powdered PTFE crosslinked body was filled into a cylindrical metal mold with a diameter of 32 mm at room temperature. Next, after this was gradually pressurized to 19.6 MPa and maintained for 5 minutes, it was taken out of the metal mold to provide the pre-molded body. This pre-molded body was placed in a circulating air oven at 200 °C, and after being heated at a temperature increase rate of 25 °C/hour to 365 °C and baked for 1 hour, it was cooled down to 200 °C at a cooling rate of 60 °C/hour, and then was taken out of the oven to cool slowly to room temperature. A sliding test piece with an outer diameter of 25.6 mm, and inner diameter of 20.0 mm and a height of 15.0 mm was machined off from the molded body obtained.

An EFM-III-F apparatus (Orientec Co., Ltd.) was used, a partner component made of SUS304 was used, and the coefficient of friction and the specific wear amount were investigated by carrying out a friction and wear test under the following conditions - pressure: 0.4 MPa; rate: 1 m/sec; test duration: 10 hours. The results are described in Table 1.

### (Measurement of creep resistance)

A 15 g sample of the powdered PTFE crosslinked body was filled into a cylindrical metal mold with a diameter of 29.0 mm at room temperature. Next, after this was gradually pressurized to 14.0 MPa and maintained for 2 minutes, it was taken out of the metal mold to provide the pre-molded body. This pre-molded body was placed in a circulating air oven at 290 °C, and after it was heated to 365 °C at a temperature increase rate of 120 °C/hour and baked for 30 minutes, it was cooled down to 294 °C at a cooling rate of 60 °C/hour, and after it was maintained at 294 °C for 24 minutes, it was taken out of the oven and cooled slowly to room temperature. A cylindrical compression creep test piece with a diameter of 11.3 mm and a height of 10.0 mm was machined off from the molded body obtained.

The compression creep of the test piece obtained was investigated at room temperature (23±2 °C), based on ASTM D621-64. After a load of 13.7 MPa of pressure for a 24 hour period, complete deformation had been achieved. Next, the deformation ratio after the load was released and continued over the course of 24 hours is taken as permanent distortion. The results are described in Table 1.

### (Tensile test)

A 12 g sample of the powdered PTFE crosslinked body was filled into a cylindrical metal mold with a diameter of 29.0 mm at room temperature. Next, after this was gradually pressurized to 14.0 MPa and maintained for 2 minutes, it was taken out of the metal mold to provide the pre-molded body. This pre-molded body was placed in a circulating air oven at 290 °C, and after it was heated to 365 °C at a temperature increase rate of 120 °C/hour and baked for 30 minutes, it was cooled down to 294 °C at a cooling rate of 60 °C/hour, and after it was maintained at 294 °C for 24 minutes, it was taken out of the oven and cooled slowly to room temperature. After the molded body obtained was cut into a film shape with a thickness of 0.5 mm, it underwent annealing treatment in a circulating air oven at 380 °C for a period of 5 minutes, was cooled down to 250 °C at a cooling rate of 60 °C/hour, and after it was maintained at 250 °C for 5 minutes, it was taken out of the oven and cooled to room temperature. A microdumbell was punched from the film obtained in the direction of mold compression and the orthogonal direction as described in ASTM D 4895-94, to give the tensile test pieces.

The tensile test was carried out using the Autograph AG-300kNI (Shimadzu Corp.) at a tensile rate of 50 mm/minute, and the elastic modulus was determined. The results are described in Table 1.

### <Working Example 2>

The test pieces were manufactured and the test was carried out in the same manner as for Working Example 1, except the PTFE powder as in Working Example 1 is replaced with that obtained in Synthesis Example 2, and the preparation of the powdered PTFE crosslinked body as carried out in Working Example 1 was not carried out. The results are described in Table 1.

### <Working Example 3>

The powdered PTFE crosslinked body was prepared in the same manner as in Working Example 1, and the test pieces were manufactured and the tests were carried out in the same manner as in Working Example 1, except that the PTFE powder in Working Example 1 was replaced with that obtained in Synthesis Example 3. The results are described in Table 1.

### <Working Example 4>

The powdered PTFE crosslinked body was prepared in the same manner as in Working Example 1, and the test pieces were manufactured and the tests were carried out in the same manner as in Working Example 1, except that the PTFE powder in Working Example 1 was replaced with that obtained in Synthesis Example 4. The results are described in Table 1.

### <Working Example 5>

A 210 g sample of the powdered PTFE obtained in Synthesis Example 5 was filled into a metal mold with a diameter of 50 mm, and pressure was applied gradually until the molding pressure reached 29.4 MPa, after which the pressure was maintained for 5 minutes to prepare a pre-molded body. The pre-molded body obtained was taken out of the metal mold and placed in an electric oven, the temperature was increased from room temperature to 300 °C at a temperature increase rate of 50 °C/hour, then the temperature increase was continued up to 365 °C at a temperature increase rate of 25 °C/hour. After being maintained at 365 °C for 5 hours, it was cooled to 300 °C at a temperature decrease rate of 25 °C/hour, and then cooling continued at a temperature decrease rate of 50 °C/hour. In the same manner as for Working Example 1, sample pieces were prepared from the molded body obtained for use in each of the tests, and these tests were carried out. The results are described in Table 3.

### <Working Example 6>

A 210 g sample of the powdered PTFE obtained in Synthesis Example 6 was filled into a metal mold with a diameter of 50 mm, and pressure was applied gradually until the molding pressure reached 29.4 MPa, after which the pressure was maintained for 5 minutes to prepare a pre-molded body. The pre-molded body obtained was taken out of the metal mold and placed in an electric oven, the temperature was increased from room temperature to 300 °C at a temperature increase rate of 50 °C/hour. Next, after the pre-molded body was maintained at a temperature of 300 °C for 24 hours, the temperature was increased continued up to 365 °C at a temperature increase rate of 25 °C/hour. After being maintained at 365 °C for 5 hours, it was cooled to 300 °C at a temperature decrease rate of 25 °C/hour, and then cooling continued at a temperature decrease rate of 50 °C/hour. In the same manner as for Working Example 1, sample pieces were prepared from the molded body obtained for use in each of the tests, and these tests were carried out. The results are described in Table 3.

### <Working Example 7>

The molded body was obtained in the same manner as in Working Example 6, except that the PTFE powder in Working Example 6 was replaced with that obtained in Synthesis Example 7. In the same manner as for Working Example 1, sample pieces were prepared from the molded body obtained for use in each of the tests, and these tests were carried out. The results are described in Table 3.

### <Working Example 8>

A 210 g sample of the powdered PTFE crosslinked body obtained in Synthesis Example 2 was filled into a metal mold with a diameter of 50 mm, and pressure was applied gradually until the molding pressure reached 29.4 MPa, after which the pressure was maintained for 5 minutes to prepare a pre-molded body. The pre-molded body obtained was taken out of the metal mold and placed in an electric oven, the temperature was increased from room temperature to 300 °C at a temperature increase rate of 50 °C/hour, then the temperature increase was continued up to 365 °C at a temperature increase rate of 25 °C/hour. After being maintained at 365 °C for 5 hours, it was cooled to 300 °C at a temperature decrease rate of 25 °C/hour, and then cooling continued at a temperature decrease rate of 50 °C/hour. In the same manner as for Working Example 1, sample pieces were prepared from the molded body obtained for use in each of the tests, and these tests were carried out. The results are described in Table 4.

### <Working Example 9>

As based on 100 parts by weight of PTFE powder (M-111, Daikin Industries, Ltd.), 100 parts by weight of the powdered PTFE crosslinked body obtained in Synthesis Example 2 was added, and these were mixed thoroughly for a period of 1 minute at the rate of 3000 rpm using a cutter/mixer (model K-55, Aikohsha Manufacturing Co., Ltd.). A 210 g portion of the powder mixture obtained was filled into a metal mold with a 50 mm diameter, and pressure was applied gradually until the molding pressure reached 29.4 MPa, after which the pressure was maintained for a further 5 minutes to prepare a pre-molded body. The pre-molded body obtained was taken out of the metal mold and placed in an electric oven, the temperature was increased from room temperature to 300°C at a temperature increase rate of 50 °C/hour, then the temperature increase was continued up to 365 °C at a temperature increase rate of 25 °C/hour, After maintaining the pre-molded body at 365 °C for 5 hours, it was cooled to 300 °C at a temperature decrease rate of 25 °C/hour, and then cooling continued at a temperature decrease rate of 50 °C/hour. In the same manner as for Working Example 1, sample pieces were prepared from the molded body obtained for use in each of the tests, and these tests were carried out. The results are described in Table 4.

### <Working Example 10>

This was carried out in the same manner as for Working Example 9, except as based on 400 parts by weight of PTFE powder (M-111, Daikin Industries, Ltd.), 100 parts by weight of the powdered PTFE crosslinked body obtained in Synthesis Example 2 was added. In the same manner as for Working Example 1, sample pieces were prepared from the molded body obtained for use in each of the tests, and these tests were carried out. The results are described in Table 4.

### (Comparative Example 1)

Each of the sample pieces were prepared and the tests were carried out in the same manner as in Working Example 1, except that the powdered PTFE crosslinked body in Working Example 1 was replaced by PTFE powder (F-104, Daikin Industries, Ltd.). The results are described in Table 2.

### (Comparative Example 2)

Each of the sample pieces were prepared in the same manner as in Working Example 1, except that the powdered PTFE crosslinked body in Working Example 1 was replaced by PTFE powder (F-104, Daikin Industries, Ltd.), these test pieces were irradiated with 100 kGy of gamma radiation in a vacuum. Following this, the tests were carried out in the same manner as in Working Example 1. The results are described in Table 2.

### (Comparative Example 3)

Each of the sample pieces were prepared in the same manner as in Working Example 1, except that the powdered PTFE crosslinked body in Working Example 1 was replaced by PTFE powder (F-104, Daikin Industries, Ltd.), these test pieces were irradiated with 1000 kGy of gamma radiation in a vacuum. Following this, the tests were carried out in the same manner as in Working Example 1. The results are described in Table 2.

### (Comparative Example 4)

A 210 g sample of powdered PTFE (M-111, Daikin Industries, Ltd.) was filled into a metal mold with a diameter of 50 mm, and pressure was applied gradually until the molding pressure reached 29.4 MPa, after which the pressure was maintained for a further 5 minutes to prepare a pre-molded body. The pre-molded body obtained was taken out of the metal mold and placed in an electric oven, the temperature was increased from room temperature to 365 °C at a temperature increase rate of 50 °C/hour. Then, after the pre-molded body was maintained at 365 °C for 5 hours, it was cooled at a temperature decrease rate of 50 °C/hour. In the same manner as for Working Example 1, sample pieces were prepared from the molded body obtained for use in each of the tests, and these tests were carried out. The results are described in Table 3.

**<Table 1>**

| | | Working Example 1 | Working Example 2 | Working Example 3 | Working Example 4 |
|---|---|---|---|---|---|
| Resin composition | Modified PTFE | Synthesis Example 1 | Synthesis Example 2 | Synthesis Example 3 | Synthesis Example 4 |
| Friction / wear Test | Specific wear amount (10⁻⁸×mm³/N•m) | 5.66×10⁴ | 6.46×10⁴ | 4.87×10⁴ | 5.96×10⁴ |
| | Coefficient of friction | 0.16∼0.25 | 0.13∼0.23 | 0.18∼0.26 | 0.15∼0.22 |
| Compression creep Test | Compression creep (%) | 2.6 | 1.8 | 2.6 | 2.8 |
| | Permanent distortion (%) | 2.3 | 1.6 | 2.3 | 2.3 |
| Tensile test | Elasticity modulus (MPa) | 489 | 505 | 497 | 481 |
| | Yield point strength (MPa) | 11.1 | 11.5 | 10.9 | 10.7 |

**<Table 2>**

| | | Comparative example 1 | Comparative example 2 | Comparative example 3 |
|---|---|---|---|---|
| Friction / wear Test | Specific wear amount (10⁻⁸×mm³/N•m) | 2.38×10⁶ | 9.14×10³ | 4.59×10³ |
| | Coefficient of friction | 0.22∼0.30 | 0.15∼0.25 | 0.17∼0.19 |
| Compression creep Test | Compression creep (%) | 14.0 | 4.0 | 13 |
| | Permanent distortion (%) | 10.1 | 2.7 | 1.0 |
| Tensile test | Elasticity modulus (MPa) | 453 | 507 | 578 |
| | Yield point strength (MPa) | 9.8 | 10.7 | 11.8 |

**<Table 3>**

| | | Working Example 5 | Working Example 6 | Working Example 7 | Comparative e example 4 |
|---|---|---|---|---|---|
| Resin composition | Modified PTFE | Synthesis Example 5 | Synthesis Example 6 | Synthesis Example 7 | M-111 |
| Friction / wear Test | Specific wear amount (10⁻⁸×mm³/N•m) | 2.90×10³ | 3.89×10⁴ | 4.92×10⁴ | 1.18×10⁶ |
| | Coefficient of friction | 0.33∼0.41 | 0.23∼0.28 | 0.21∼0.30 | 0.10∼0.16 |
| Compression creep Test | Compression creep (%) | 4.7 | 5.0 | 5.2 | 5.7 |
| | Permanent distortion (%) | 3.0 | 3.2 | 3.3 | 3.6 |
| Tensile test | Elasticity modulus (MPa) | 668 | 623 | 607 | 469 |
| | Yield point strength (MPa) | 11.1 | 11.0 | 10.7 | 9.3 |

**<Table 4>**

| | | Working Example 8 | Working Example 9 | Working Example 10 | Comparati ve example 4 |
|---|---|---|---|---|---|
| Resin composition | PTFE containing reactive functional groups (Synthesis Example 2) (wt%) | 100 | 50 | 20 | 0 |
| | Powdered PTFE (M-111) (wt%) | 0 | 50 | 80 | 100 |
| Friction / wear Test | Specific wear amount (10⁻⁸×mm³/N•m) | 8.66×10² | 3.10×10⁴ | 4.11×10⁵ | 1.18×10⁶ |
| | Coefficient of friction | 0.14∼0.23 | 0.12∼0.14 | 0.10∼0.13 | 0.10∼0.16 |
| Compression creep Test | Compression creep (%) | 1.7 | 3.0 | 4.1 | 5.7 |
| | Permanent distortion (%) | 1.6 | 2.5 | 2.7 | 3.6 |
| Tensile test | Elasticity modulus (MPa) | 742 | 603 | 564 | 469 |
| | Yield point strength (MPa) | 12.0 | 10.6 | 10.5 | 9.3 |

As is clear from Tables 1 through 4, the PTFE molded body of the present invention retains the conventional surface characteristics. Moreover, when compared to conventional PTFE resins, the PTFE molded body of the present invention has improved creep characteristics, and is perceived to undergo deformation with more difficulty.

Furthermore, in Table 2 are described the various collected physical properties of polytetrafluoroethylene that has been crosslinked with ionizing radiation (see Comparative Examples 2 & 3), but there is a problem with the crosslinking treatment method that uses ionizing radiation in that it requires expensive dedicated equipment, and a problem that crosslinking cannot be carried out uniformly over a large surface area or on a powder, and additionally is beset with the problem of a bias toward the surface when a component undergoes a crosslinking treatment, so that this certainly cannot be said to be a preferred crosslinking treatment method.

### (3) Preparation of the resin blend composition of matter

### <Working Example 11>

A Brabender mixer (Labo Plastomill manufactured by Toyo Seiki Co, Ltd.) with an internal volume of 60 cm³ that was set up at 280 °C was charged with 55.0 g of polycarbonate resin (Panlite L-1125WP from Teijin Kasei Co.), and after being melted for only 5 minutes at a speed of 50 rpm, 6.0 g of powdered PTFE that was obtained from Synthesis Example 2 was added, and after 10 minutes of mix processing at 50 rpm a resin blend composition of matter was obtained.

### <Working Example 12>

A resin blend composition of matter was obtained by mix processing in the same manner as for Working Example 11, except the 55.0 g of polycarbonate resin in Working Example 11 was replaced by 57.0 g of nylon 66 (Leona 1300S, from Asahi Kasei Industries).

### <Working Example 13>

A resin blend composition of matter was obtained by mix processing in the same manner as for Working Example 11, except the 55.0 g of polycarbonate resin in Working Example 11 was replaced by 72.0 g of a liquid crystal polyester (Vectra A130, from Polyplastics Co., Ltd.), and furthermore the 6.0 g of the powdered PTFE was 7.9 g, and the temperature setting of 280 °C was replaced with 320 °C.

### <Working Example 14>

A resin blend composition of matter was obtained by mix processing in the same manner as for Working Example 11, except the 55.0 g of polycarbonate resin in Working Example 11 was replaced by 77.0 g of fluororesin (Neoflon EFEP RP-5000, from Daikin Industries, Ltd.), and furthermore the 6.0 g of the powdered PTFE was 8.5 g.

### <Working Example 15>

A resin blend composition of matter was obtained by mix processing in the same manner as for Working Example 11, except the 55.0 g of polycarbonate resin in Working Example 11 was replaced by 93.0 g of tetrafluoroethylene-hexafluoropropylene copolymer (Neoflon FEP NP-30, from Daikin Industries, Ltd.), and furthermore the 6.0 g of the powdered PTFE was 10.3 g and the temperature setting of 280 °C was replaced with 300 °C.

### <Working Example 16>

A resin blend composition of matter was obtained by mix processing in the same manner as for Working Example 11, except the 55.0 g of polycarbonate resin in Working Example 11 was replaced by 93.0 g of tetrafluoroethylene-perfluoro(alkyl vinyl ether) copolymer (Neoflon PFA AP-231, from Daikin Industries, Ltd.), and furthermore the 6.0 g of the powdered PTFE was 10.3 g and the temperature setting of 280 °C was replaced with 320 °C.

### <Working Example 17>

A resin blend composition of matter was obtained by mix processing in the same manner as for Working Example 11, except the 55.0 g of polycarbonate resin in Working Example 11 was replaced by 92.0 g of poly(chlorotrifluoroethylene) (Neoflon PCTFE M-300, from Daikin Industries, Ltd.), and furthermore the 6.0 g of the powdered PTFE was 10.3 g and the temperature setting of 280 °C was replaced with 320 °C.

### <Working Example 18>

A resin blend composition of matter was obtained by mix processing in the same manner as for Working Example 11, except the 55.0 g of polycarbonate resin in Working Example 11 was replaced by 82.0 g of tetrafluoroethylene-ethylene copolymer (Neoflon ETFE EP-610, from Daikin Industries, Ltd.), and furthermore the 6.0 g of the powdered PTFE was 9.1 g.

### INDUSTRIAL APPLICABILITY

The crosslinking polytetrafluoroethylene that relates to the present invention maintains the conventional strength, crystallinity and surface characteristics and the like without any anisotropy or heterogeneity, and can provide a polytetrafluoroethylene resin that is more difficult to deform than conventional PTFE resin, and the powdered polytetrafluoroethylene crosslinked body provided by this crosslinkable polytetrafluoroethylene is useful as a modifying material and the like, and the polytetrafluoroethylene molded body is useful as a sliding component and the like.

## Claims

1. A method for molding polytetrafluoroethylene wherein a crosslinkable polytetrafluoroethylene that possesses a reactive functional group that is represented by the Generic Formula (2):
<Structure 2> 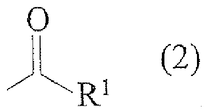 (where in the formula, R¹ is a hydrogen atom, halogen atom, -OR³, -N(R³)₂, -R³, and R³ is an alkyl group of from 1 to 10 carbon atoms that optionally contains fluorine, or is a hydrogen atom),
and has a melt viscosity of 10⁷ Pas (10⁸ poise) or higher or has a modulus of elongation prior to heat treatment of 100 MPa or higher; and substantially does not flow even when heated up to or above its melting point, is baked after it is compression molded.

2. A polytetrafluoroethylene molded body, wherein said molded body is obtained by the method of claim 1.

3. A crosslinkable polytetrafluoroethylene that possesses a reactive functional group that is a functional group as represented by the Generic Formula (2):
<Structure 2> 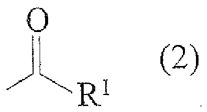 (where in the formula, R¹ is a hydrogen atom, halogen atom, -OR³, -N(R³)₂, -R³, and R³ is an alkyl group of from 1 to 10 carbon atoms that optionally contains fluorine, or is a hydrogen atom),
and has a melt viscosity of 10⁷ Pas (10⁸ poise) or higher or has a modulus of elongation prior to heat treatment of 100 MPa or higher; and substantially does not flow even when heated up to or above its melting point.

4. A polytetrafluoroethylene molded body obtained by the cross-linking reaction of the crosslinkable polytetrafluoroethylene described in Claim 3.
